# EUROPÄISCHE PATENTSCHRIFT

(11) **EP 2 523 397 B1**
(45) Veröffentlichungstag und Bekanntmachung des Hinweises auf die Patenterteilung: **28.01.2015**
(21) Anmeldenummer: 12005304.6
(22) Anmeldetag: 30.03.2011
(51) Int. Cl.: H04L 12/42, H04L 12/40, H04L 29/00

(54) **Verfahren und Vorrichtung zum Betrieb von Windpark-Verbundnetzen mit verbessertem Daten-Übertragungsprotokoll**
Procédé et dispositif de fonctionnement de réseaux d'interconnexion d'éoliennes à l'aide d'un protocole de transmission de données amélioré
Method and device for operating wind park grids with improved data transfer protocol

(30) Priorität: 23.04.2010 AT 6632010
(43) Veröffentlichungstag der Anmeldung: 14.11.2012
(62) Teilanmeldung aus: 11002613.5
(73) Patentinhaber: Bachmann GmbH, 6800 Feldkirch (AT)
(72) Erfinder: Fritsche, Josef, 6714 Nüziders (AT)
(74) Vertreter: Riebling, Peter

(56) Entgegenhaltungen:
- EP-A2- 1 659 718
- US-A1- 2009 254 224
- J-D DECOTIGNIE: "The Many Faces of Industrial Ethernet [Past and Present]", IEEE INDUSTRIAL ELECTRONICS MAGAZINE, IEEE, US, Bd. 3, Nr. 1, 1. März 2009 (2009-03-01), Seiten 8-19, XP011280982, ISSN: 1932-4529, DOI: 10.1109/MIE.2009.932171
- THOMESSE J P: "Fieldbus Technology in Industrial Automation", PROCEEDINGS OF THE IEEE, IEEE. NEW YORK, US, Bd. 93, Nr. 6, 1. Juni 2005 (2005-06-01), Seiten 1073-1101, XP011133105, ISSN: 0018-9219, DOI: 10.1109/JPROC.2005.849724

## Beschreibung

Die Erfindung betrifft eine Vorrichtung zum Betrieb von Windpark-Verbundnetzen, insbesondere eine Vorrichtung zur Vernetzung zwischen dem Parkmanagement-System (wird auch als Parkmaster bezeichnet) und den einzelnen Windkraftanlagen (WKA) eines einzelnen Windparks über ein zentrales Netzwerk zwecks Datenübertragung in beiden Richtungen, welches üblicherweise als Ring ausgebildet ist.
- Im Zuge der sukzessiven weltweiten Forcierung von regenerativen Energien • und hier im speziellen der intensiven Nutzung der Windenergie werden von Seiten der Energieversorgungsunternehmen (EVU) erhöhte Anforderungen an die Kommunikation von Windparks gestellt.
- Windparks können aus mehreren 100 Windkraftanlagen (=Slaves) bestehen, • wobei ein Parkmaster den Windpark überwacht und steuert. Der Parkmaster hat dabei die Aufgabe die jeweiligen Slaves (z.B. speicherprogrammierbare Steuerung) der einzelnen Windkraftanlagen in bestimmten Zeitintervallen (Zyklen) mit Daten zu versorgen.
- Standard Protokolle wie Realtime Ethernet und auch sonstige Ethernet basierte Feldbusprotokolle können den erhöhten Anforderungen nicht gerecht werden (z.B. 500 Windkraftanlagen im Millisekunden-Zyklus bedienen (typisch 5-20 ms je nach Performance des Parkmanagement-Systems) und dabei über 100 Nutzdatenbytes bidirektional austauschen.)

Üblich ist ein Aufbau eines Windpark-Verbundnetzes, bei dem eine Recheneinheit (Parkmaster) über Signalpfade und Switches mit einem Parknetz verbunden ist. Dabei können Teile eines Windparks zu Subnetzen mit jeweils bis zu 50 Einheiten von Windkraftanlagen bestehen, die ihrerseits über ein übergeordnetes Netzwerk miteinander kommunizieren. Jede Windparkgruppe speist die von den einzelnen WKA erzeugten Daten aus dem Subnetz über ein Datenkopplungsmodul (Switch) in das Parknetzwerk ein. Am Parknetzwerk können somit eine Vielzahl von Subnetzen anschließen, wobei jedes Subnetz aus bis 50 einzelnen WKA besteht. Denkbar sind aber auch Windpark-Verbundnetze, die mit bis zu 500 WKAs ein Netzwerk ohne Subnetz bilden.

Hier haben Versuche gezeigt, dass es bisher keine Datenübertragungsprotokolle gibt, die eine schnelle Kommunikation mit den oben beschriebenen Mengengerüsten und Topologien erlauben.

Das klassische Ethernet mit seinem TCP/IP-Protkoll ist nicht für diese großen Datenmengen und das geforderte Echtzeitverhalten ausgelegt.

Es muss nämlich berücksichtigt werden, dass jede Windkraftanlage einen Datenstrom von z. B. 100 bis 300 Byte empfängt und sendet und zwar in jedem Zyklus. Eine optimale Zykluszeit wäre hierbei 20 Millisekunden oder geringer. Die Zykluszeit darf nur unwesentlich über- oder unterschritten werden (Echtzeitverhalten).

Die bekannten Realtime-Ethernetprotokolle sind ebenfalls nicht geeignet, diese großen Datenmengen und Anzahl Teilnehmer in der vorgegebenen Zykluszeit zu bearbeiten. Zudem haben diese Protokolle keine Möglichkeit mit Sicherheitsmechanismen wie Verschlüsselung und Authentication betrieben zu werden, wodurch die bekannten Realtime-Ethernetprotokolle ebenfalls ausscheiden.

Versuche haben gezeigt, dass das Standard Netzwerk-Protokoll nicht ausreichend determinististisch ist, weil das aus 7 Schichten bestehende Mehrschichtenmodell des TCP/IP-Protokolls (OSI) eine starke Verlangsamung der Datenübertragung erbringt, was im vorliegenden Fall bei den hohen gestellten Anforderungen nicht mehr für die Datenübertragung ausreicht. Das TCP/IP Protokoll hat auch noch das Problem, dass die Datenpakete nicht priorisiert werden können. Eine bevorzugte Behandlung von bestimmten Echtzeitdaten ist so nicht möglich.

Als OSI-Schichtenmodell (auch OSI-Referenzmodell; englisch Open Systems Interconnection Reference Model) wird ein Schichtenmodell der Internationalen Organisation für Normung (ISO) bezeichnet. Es wurde als Designgrundlage von Kommunikationsprotokollen entwickelt.

Die Aufgaben der Kommunikation wurden dazu in sieben aufeinander aufbauende Schichten (layers) unterteilt. Für jede Schicht existiert eine Beschreibung, in welcher steht, was diese zu leisten hat. Diese Anforderungen müssen von den Kommunikationsprotokollen realisiert werden. Die konkrete Umsetzung wird dabei nicht vorgegeben und kann daher sehr unterschiedlich sein. Somit existieren mittlerweile für jede Schicht zahlreiche solcher Protokolle.

Beim OSI-Modell sind es sieben Schichten mit festgelegten Anforderungen. Auf jeder einzelnen Schicht setzt jeweils eine Instanz die Anforderungen um. Die Instanzen auf Sender- und Empfängerseite müssen nach festgelegten Regeln arbeiten, damit sie sich einig sind, wie die Daten zu verarbeiten sind. Die Festlegung dieser Regeln wird in einem Protokoll beschrieben und bildet eine logische, horizontale Verbindung zwischen zwei Instanzen derselben Schicht.

Jede Instanz stellt Dienste zur Verfügung, die eine direkt darüberliegende Instanz nutzen kann. Zur Erbringung der Dienstleistung bedient sich eine Instanz selbst der Dienste der unmittelbar darunterliegenden Instanz. Der reale Datenfluss erfolgt daher vertikal. Die Instanzen einer Schicht sind genau dann austauschbar, wenn sie sowohl beim Sender als auch beim Empfänger ausgetauscht werden.

### Die sieben Ebenen des OSI-Schichtenmodells (Stand der Technik)

Der Abstraktionsgrad der Funktionalität nimmt von Schicht 7 bis Schicht 1 ab.

### Schicht 7 - Anwendungsschicht

Die Anwendungsschicht (engl. Application Layer, auch: Verarbeitungsschicht, Anwenderebene) ist die oberste der sieben hierarchischen Schichten. Sie verschafft den Anwendungen Zugriff auf das Netzwerk (zum Beispiel für Datenübertragung, E-Mail, Virtual Terminal, Remote Login etc.). Der eigentliche Anwendungsprozess liegt oberhalb der Schicht und wird nicht vom OSI-Modell erfasst.
Hard-/Software auf dieser Schicht: Gateway, Protokollumwandler, Fax-zu-E-Mail-Dienste
Protokolle und Normen: X.400, X.500, ISO 8571 (FTAM), ISO 9040/9041 (VT), ISO 9506 (MMS), MHS, VTP, FTP, NFS, Telnet, SMTP, HTTP, LDAP, JTM, SSH

### Schicht 6 - Darstellungsschicht

Die Darstellungsschicht (engl. Presentation Layer, auch: Datendarstellungsschicht, Datenbereitstellungsebene) setzt die systemabhängige Darstellung der Daten (zum Beispiel ASCII, EBCDIC) in eine unabhängige Form um und ermöglicht somit den syntaktisch korrekten Datenaustausch zwischen unterschiedlichen Systemen. Auch Aufgaben wie die Datenkompression und die Verschlüsselung gehören zur Schicht 6. Die Darstellungsschicht gewährleistet, dass Daten, die von der Anwendungsschicht eines Systems gesendet werden, von der Anwendungsschicht eines anderen Systems gelesen werden können. Falls erforderlich, agiert die Darstellungsschicht als Übersetzer zwischen verschiedenen Datenformaten, indem sie ein für beide Systeme verständliches Datenformat, die ASN.1 (Abstract Syntax Notation One), verwendet.
Protokolle und Normen: ISO 8822 / X.216 (Presentation Service), ISO 8823 / X.226 (Connection-Oriented Presentation Protocol), ISO 9576 (Connectionless Presentation Protocol)

### Schicht 5 - Kommunikationssteuerungsschicht

Die Schicht 5 (engl. Session Layer, Steuerung logischer Verbindungen, auch: Sitzungsschicht) sorgt für die Prozesskommunikation zwischen zwei Systemen. Hier findet sich unter anderem das Protokoll RPC (Remote Procedure Call) um Zusammenbrüche der Sitzung und ähnliche Probleme zu beheben, stellt die Sitzungsschicht Dienste für einen organisierten und synchronisierten Datenaustausch zur Verfügung. Zu diesem Zweck werden Wiederaufsetzpunkte, so genannte Fixpunkte (Check Points) eingeführt, an denen die Sitzung nach einem Ausfall einer Transportverbindung wieder synchronisiert werden kann, ohne dass die Übertragung wieder von vorne beginnen muss.
Protokolle und Normen: ISO 8306 / X.215 (Session Service), ISO 8327 / X.225 (Connection-Oriented Session Protocol), ISO 9548 (Connectionless Session Protocol), RPC (Remote Procedure Call)

### Schicht 4 - Transportschicht

Zu den Aufgaben der Transportschicht (engl. Transport Layer, auch: Ende-zu-Ende-Kontrolle, Transport-Kontrolle) zählen die Segmentierung von Datenpaketen und die Stauvermeidung (engl. congestion avoidance). Die Transportschicht bietet den anwendungsorientierten Schichten 5 bis 7 einen einheitlichen Zugriff, so dass diese die Eigenschaften des Kommunikationsnetzes nicht zu berücksichtigen brauchen. Fünf verschiedene Dienstklassen unterschiedlicher Güte sind in Schicht 4 definiert und können von den oberen Schichten benutzt werden, vom einfachsten bis zum komfortabelsten Dienst mit Multiplexmechanismen, Fehlersicherungs- und Fehlerbehebungsverfahren.
Protokolle und Normen: ISO 8073/X.224, ISO 8602, TCP, UDP, SCTP.

### Schicht 3 - Vermittlungsschicht

Die Vermittlungsschicht (engl. Network Layer, auch: Paketebene oder Netzwerkschicht) sorgt bei leitungsorientierten Diensten für das Schalten von Verbindungen und bei paketorientierten Diensten für die Weitervermittlung von Datenpaketen. Die Datenübertragung geht in beiden Fällen jeweils über das gesamte Kommunikationsnetz hinweg und schließt die Wegesuche (Routing) zwischen den Netzknoten mit ein. Da nicht immer eine direkte Kommunikation zwischen Absender und Ziel möglich ist, müssen Pakete von Knoten, die auf dem Weg liegen, weitergeleitet werden. Weitervermittelte Pakete gelangen nicht in die höheren Schichten, sondern werden mit einem neuen Zwischenziel versehen und an den nächsten Knoten gesendet.

Zu den wichtigsten Aufgaben der Vermittlungsschicht zählen der Aufbau und die Aktualisierung von Routingtabellen und die Fragmentierung von Datenpaketen. Neben dem Internet Protocol zählen auch die NSAP-Adressen zu dieser Schicht. Da ein Kommunikationsnetz aus mehreren Teilnetzen unterschiedlicher Übertragungsmedien und -protokolle bestehen kann, sind in dieser Schicht auch die Umsetzungsfunktionen angesiedelt, die für eine Weiterleitung zwischen den Teilnetzen notwendig sind.
Hardware auf dieser Schicht: Router, Layer-3-Switch (BRouter)
Protokolle und Normen: X.25, ISO 8208, ISO 8473 (CLNP), ISO 9542 (ESIS), IP, IPsec, ICMP

### Schicht 2 - Sicherungsschicht

Aufgabe der Sicherungsschicht (engl. Data Link Layer, auch: Abschnittssicherungsschicht, Datensicherungsschicht, Verbindungssicherungsschicht, Verbindungsebene, Prozedurebene) ist es, eine zuverlässige, das heißt weitgehend fehlerfreie Übertragung zu gewährleisten und den Zugriff auf das Übertragungsmedium zu regeln. Dazu dient das Aufteilen des Bitdatenstromes in Blöcke und das Hinzufügen von Folgenummern und Prüfsummen. Fehlerhafte, verfälschte oder verlorengegangene Blöcke können vom Empfänger durch Quittungs- und Wiederholungsmechanismen erneut angefordert werden. Die Blöcke werden auch als Frames oder Rahmen bezeichnet.
Eine "Datenflusskontrolle" ermöglicht es, dass ein Empfänger dynamisch steuert, mit welcher Geschwindigkeit die Gegenseite Blöcke senden darf. Die internationale Ingenieursorganisation IEEE sah die Notwendigkeit, für lokale Netze auch den konkurrierenden Zugriff auf ein Übertragungsmedium zu regeln, was im OSI-Modell nicht vorgesehen ist.

Nach IEEE ist die Schicht 2 in zwei Unter-Schichten (sub layers) unterteilt: LLC (Logical Link Control) und MAC (Media Access Control).
Hardware auf dieser Schicht: Bridge, Switch (Multiport-Bridge).
Das Ethernet-Protokoll beschreibt sowohl Schicht 1 als auch Schicht 2, wobei auf dieser als Zugriffskontrolle CSMA/CD zum Einsatz kommt.
Protokolle und Normen, die auf anderen Schicht-2-Protokollen und -Normen aufsetzen: HDLC, SDLC, DDCMP, IEEE 802.2 (LLC), ARP, RARP, STP Protokolle und Normen, die direkt auf Schicht 1 aufsetzen: IEEE 802.11 (WLAN), IEEE 802.4 (Token Bus), IEEE 802.5 (Token Ring), FDDI

### Schicht 1 - Physikalische Schicht

Die Bitübertragungsschicht (engl. Physical Layer) ist die unterste Schicht. Diese Schicht stellt mechanische, elektrische und weitere funktionale Hilfsmittel zur Verfügung, um physikalische Verbindungen zu aktivieren bzw. deaktivieren, sie aufrechtzuerhalten und Bits darüber zu übertragen. Das können zum Beispiel elektrische Signale, optische Signale (Lichtleiter, Laser), elektromagnetische Wellen (drahtlose Netze) oder Schall sein. Die für sie verwendeten Verfahren bezeichnet man als übertragungstechnische Verfahren. Geräte und Netzkomponenten, die der Bitübertragungsschicht zugeordnet werden, sind zum Beispiel die Antenne und der Verstärker, Stecker und Buchse für das Netzkabel, der Repeater, der Hub, der Transceiver, das T-Stück und der Abschlusswiderstand (Terminator).

Auf der Bitübertragungsschicht wird die digitale Bitübertragung auf einer leitungsgebundenen oder leitungslosen Übertragungsstrecke bewerkstelligt. Die gemeinsame Nutzung eines Übertragungsmediums kann auf dieser Schicht durch statisches Multiplexen oder dynamisches Multiplexen erfolgen. Dies erfordert neben den Spezifikationen bestimmter Übertragungsmedien (zum Beispiel Kupferkabel, Lichtwellenleiter, Stromnetz) und der Definition von Steckverbindungen noch weitere Elemente. Darüber hinaus muss auf dieser Ebene gelöst werden, auf welche Art und Weise überhaupt ein einzelnes Bit übertragen werden soll.

Damit ist Folgendes gemeint: In Rechnernetzen werden heute Informationen zumeist in Form von Bitfolgen übertragen. Selbstverständlich sind der physikalischen Übertragungsart selbst, zum Beispiel Spannungspulse in einem Kupferkabel im Falle elektrischer Übertragung, oder Frequenzen und Amplituden elektromagnetischer Wellen im Falle von Funkübertragung, die Werte 0 und 1 unbekannt. Für jedes Medium muss daher eine Codierung dieser Werte gefunden werden, beispielsweise ein Spannungsimpuls von bestimmter Höhe oder eine Funkwelle mit bestimmter Frequenz, jeweils bezogen auf eine bestimmte Dauer. Für ein spezifisches Netz müssen diese Aspekte präzise definiert werden. Dies geschieht mit Hilfe der Spezifikation der Bitübertragungsschicht eines Netzes.
Hardware auf dieser Schicht: Modem, Hub, Repeater
Protokolle und Normen: V.24, V.28, X.21, RS 232, RS 422, RS 423, RS 499

Die nach dem OSI-Referenzmodell entwickelten Netzprotokolle haben mit der TCP/IP-Protokollfamilie gemeinsam, dass es sich um hierarchische Modelle handelt. Es gibt aber wesentliche konzeptionelle Unterschiede: OSI legt die Dienste genau fest, die jede Schicht für die nächsthöhere zu erbringen hat. TCP/IP hat kein derartig strenges Schichtenkonzept wie OSI. Weder sind die Funktionen der Schichten genau festgelegt noch die Dienste. Es ist erlaubt, dass eine untere Schicht unter Umgehung zwischenliegender Schichten direkt von einer höheren Schicht benutzt wird. TCP/IP ist damit erheblich effizienter als die OSI-Protokolle. Nachteil bei TCP/IP ist, dass es für viele kleine und kleinste Dienste jeweils ein eigenes Netzprotokoll gibt. OSI hat dagegen für seine Protokolle jeweils einen großen Leistungsumfang festgelegt, der sehr viele Optionen hat. Nicht jede kommerziell erhältliche OSI-Software hat den vollen Leistungsumfang implementiert. Daher wurden OSI-Profile definiert, die jeweils nur einen bestimmten Satz von Optionen beinhalten. OSI-Software unterschiedlicher Hersteller arbeitet zusammen, wenn dieselben Profile implementiert sind.

Das OSI-Schichtenmodell ist jedoch nicht ausschließlich der Grund warum TCP/IP für eine Echtzeitübertragung nicht geeignet ist. TCP/IP verwendet nur die unteren 4 Schichten. Es ist vielmehr die Tatsache, dass alle Netzwerk-Stacks, egal ob TCP/IP oder Realtime-Ethernet Protokolle, sehr viel CPU-Leistung bei der in dieser Anwendung geforderten Kommunikation erfordern oder nicht ausreichendes Echtzeitverhalten haben. Ein weiterer Grund für die fehlende Echtzeittauglichkeit von TCP/IP ist die nicht vorhandene Priorisierung der Datenpakete (VLAN Tag) und die damit verbundene Vermischung von langsamer und schneller Kommunikation.

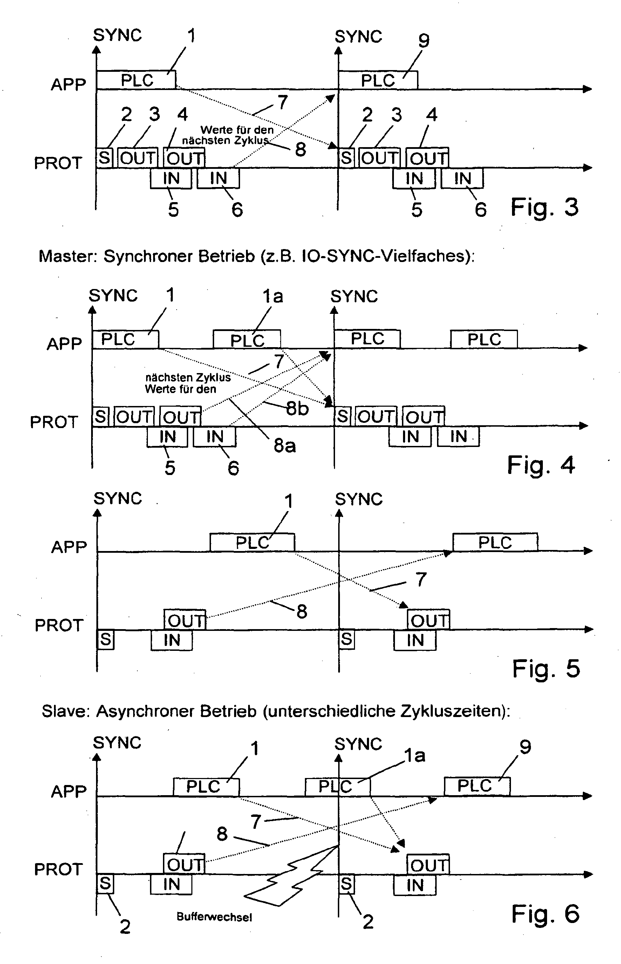

Die US 2009/254224 A1 beschreibt ein Kommunikationssystem eines typischen Windparks mit Verwendung von zwei gleichzeitig betriebenen Kommunikationsprotokollen. Figur 3 zeigt schematisch einen typischen Windpark mit einer CS (Control Station), vielen WT (Wind Turbines) und einem DCN Netzwerk dazwischen (Data Communication Network). Die Anbindung über PDCN (Public Data Communication Network) ist ein übliches Verfahren. In Figur 4 ist offenbart, dass es sich um ein Multiprotokoll mit einem gemeinsamen Transportweg handelt. Die Protokolle P1 DP, P2DP und PnDP werden nacheinander aktiv. Die aufgeführten Protokolle, von denen mindestens 2 gleichzeitig laufen müssen, sind übliche Fernwirkprotokolle.
Eine Vernetzung mit Echtzeitkommunikation in Windparks ist aus diesem Dokument nicht bekannt.

J-D Decotignie: "The Many Faces of Industrial Ethernet"; in IEEE INDUSTRIAL ELECTRONICS MAGAZINE, IEEE, US, Band 3, Nr. 1, 1. März 2009, Seiten 8-19, XP 011280982, ISSN 1932-4529, offenbart auf Seiten 12, linker Spalte "Solutions Not Compatible with Pure Ethernet" die Verwendung eines zusätzlichen MAC Layers auf Schicht 2. Es werden auch die verschiedenen Protokolle wie TDMA, Polling-based und Flexible time-triggered (FTT) aufgeführt. Im letzten Absatz auf Seite 12 steht, dass diese Methode mit dem zusätzlichen MAC Layer ineffizient ist und nicht gleichzeitig neben Knoten (Netzwerk Teilnehmern) ohne diesen zusätzlichen MAC Layer verwendet werden kann. Ganz am Ende dieses Absatzes steht, dass es notwendig ist, Knoten mit einem zusätzlichen MAC Layer in einem separaten Subnetzwerk zu betreiben.

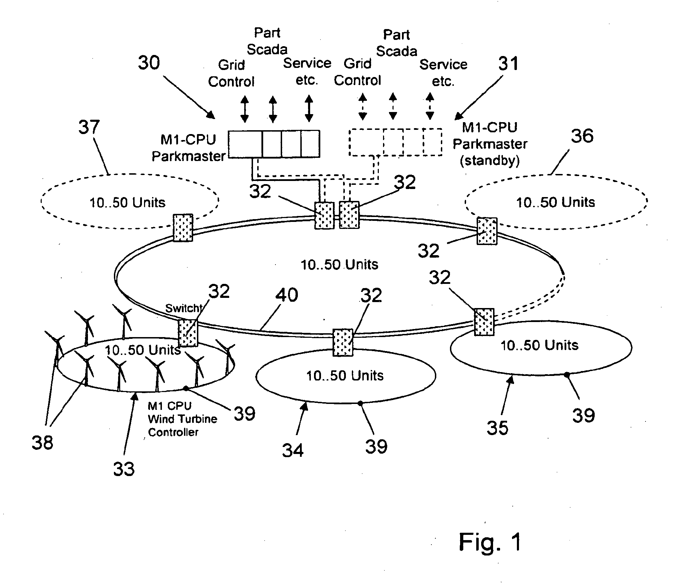

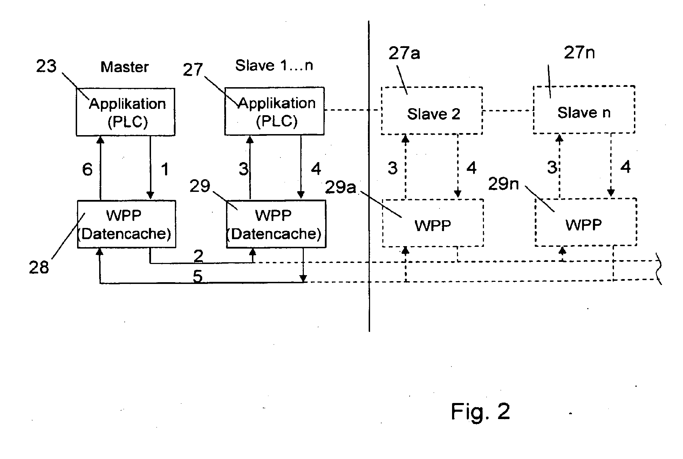

EP 1 659 718 A2 offenbart ein Synchronisationsverfahren in einem Kommunikationssystem, welches über eine spezielle Netzwerk-Topologie mit zwei Signalsträngen mit gegensinniger Anordnung und Daisy-Chaining der Nebeneinheiten arbeitet. In den Figuren 1 und 2 ist ersichtlich, dass die Datenpakete jeweils wieder beim Versender, der Haupteinheit, nach durchlaufen aller Teilnehmer, zurückkommen. Es werden zyklisch die Signallaufzeiten ermittelt und den Nebeneinheiten mitgeteilt. Gleichzeitig werden dadurch auch die Zeitgeber in den Nebeneinheiten synchronisiert. Das Verfahren dem Zwecke der Synchronisation von Zeitgebern (Uhren oder Timestamps) in den einzelnen Steuerungseinheiten, um in Werkzeugmaschinen synchrone Abläufe auf mehreren Steuerungseinheiten sicherzustellen. Es geht also um die Synchronisation von verteilten Uhren. Das Verfahren ist vergleichbar mit dem IEEE1588 Standard. Eine solche periodische Synchronisation von verteilten Uhren erfordert nicht notwendigerweise ein Echtzeitprotokoll.

### Ausgangssituation und Zielsetzung

### Anlass/Ausgangssituation

Parkregelung und Management wird in irgendeiner Form in jedem Windpark benötigt. Bisher wurde die Kommunikation jeweils vom Hersteller selber mit eigenen Entwicklungen abgedeckt. Es handelt sich dabei um applikationsartige Implementierungen (Socket Kommunikation als Teil des Betriebsführungsprogramms der WKA). Diese Art der Kommunikation stößt an Grenzen. Um den Anforderungen von heute in großen Windparks gerecht zu werden, ist eine für die schnelle Windpark-Datenübertragung, tief in die Systemsoftware eingebettete neue Datenübertragung, notwendig.

### Ziele

Es soll ein Kommunikations-Protokoll zur Verfügung gestellt werden, welches die heutigen Anforderungen an Parkregelung und Management als M2M (Machine-to-Machine) Kommunikation erfüllt. Die Kommunikation erfolgt in Datenpaketen einer bestimmten Größe vom (Parkmaster zu den einzelnen Slaves (Windturm) in beide Richtungen. Die Konfiguration und die Anbindung an die Applikation sollen so einfach wie möglich gehalten werden.

Am Parkmaster ist ein Treiber als Master und im Windturm ein Treiber als Slave notwendig. Eine Steuerung muss Master und Slave gleichzeitig sein können.

### Forderungen an die Erfindung

Umfassende Untersuchungen mit dem Standard Protokoll Profinet RT (ein verbreitetes Realtime-Ethernetprotokoll) haben gezeigt, dass Profinet RT zwar prinzipiell geeignet ist, bei größeren Parks (ab 50 Teilnehmern) übersteigt jedoch die CPU-Last auf dem Park-Server das erträgliche Maß. Andere Ethernet basierte Feldbus Protokolle können ebenfalls die Anforderungen nicht erfüllen. Die erfindungsgemäßen Besonderheiten bei der Parkregelung sind:
- Paketorientierung, über 100 Nutzdatenbytes hin und zurück
- Anzahl der Slaves (Windkraftanlagen) mit bis zu 500 Teilnehmern
- Ausdehnung des Windparks über mehrere Subnets mit Switches und Netzwerksegmente, sofern diese Broadcasts übertragen können
- Zykluszeit von einigen wenigen Millisekunden
- Normale TCP/IP Kommunikation neben der Echtzeit-Kommunikation
- Einfache Inbetriebnahme (möglichst wenig bis gar keine Konfiguration)
- Alle Teilnehmer müssen online zu- und abschaltbar sein
- Optionale Sicherheitsmechanismen wie Authentication und Verschlüsselung
- Segmentierung von Teilen eines Windparks zu eigenständigen Netzwerken (virtuelle lokale Netzwerke) über die IEEE 802.1Q VLAN-Technologie
- Netzwerk Übertragungsredundanz muss optional möglich sein
- Die Verwendung von handelsüblichen Netzwerkkomponenten (Switche, Verkabelung,..) und Ethernet Technologie (Ethernet Controller in den Endgeräten) muss möglich sein.

### Produkteinsatz

Das erfindungsgemäße Windpark-Protokoll soll in jedem Windpark, welcher mit geeigneten Steuerungen ausgestattet ist und eine brauchbare Vernetzung aufweist, einsetzbar sein. Vorerst wird von fest vernetzten Komponenten mit Übertragungsleitungen im Bereich 100/1000 MBit ausgegangen.

Die vorliegende Erfindung hat sich die **Aufgabe** gestellt, ein Protokoll für die Vernetzung einer Vielzahl von Windturmgruppen (Subnet) mit dem Parkmaster über ein zentrales Parknetz bereitzustellen, sodass man die Mengengerüste von z. B. bis zu 500 Windkraftanlagen (WKA) mit einer Zykluszeit von einigen wenigen Millisekunden über ein Parkmanagementsystem regeln kann.

Zur Lösung der gestellten Aufgabe ist die Erfindung durch die technische Lehre des Patentanspruchs 1 gekennzeichnet.

Wesentliches Merkmal der vorliegenden Erfindung sind die nachfolgend angegebenen Merkmale:

### Kommunikation

Um die Echtzeitanforderungen zu erfüllen ist die Kommunikation direkt auf dem Data Link Layer notwendig. Der Verbindungsaufbau und die azyklische Kommunikation können jedoch über TCP/IP erfolgen. [3001]
Anmerkung: Die 4-stelligen Zahlen in eckigen Klammern beziehen sich auf die Tabelle am Schluss der vorliegenden Beschreibung.

### Windparkprotokoll (abgekürzt WPP)

Der Begriff WPP wird in der gesamten Beschreibung für das erfindungsgemäße Datenübertragungsprotokoll verwendet.
- Bei der gegenständlichen Erfindung ist es nun möglich, unter anderem die folgenden Anforderungen zu erfüllen
   - Paketorientierung, über 100 Nutzdatenbytes hin und zurück pro Zyklus
   - Anzahl der Slaves mit bis zu 500 Teilnehmern
   - Ausdehnung des Windparks über mehrere Switches und logische oder physikalische Netzwerksegmente, sofern diese Broadcasts übertragen können
   - Zykluszeit von einigen wenigen Millisekunden für alle Teilnehmer
   - Normale TCP/IP Kommunikation neben der Echtzeit-Kommunikation
   - Einfache Inbetriebnahme (möglichst wenig bis gar keine Konfiguration)
   - Sicherheitsmechanismen wie Authentication und Verschlüsselung zu verwenden
   - Segmentierung von Teilen eines Windparks zu eigenständigen Netzwerken (virtuelle lokale Netzwerke) über die IEEE 802.1Q VLAN-Technologie
   - Handelsüblichen Netzwerkkomponenten (Switche, Verkabelung,..) und Ethernet Technologie (Ethernet Controller in den Endgeräten) zu verwenden
- Bei den bisherigen Protokollen handelt es sich um objektorientierte bzw. applikationsartige Implementierungen, die recht umfangreiche Paketlängen aufweisen. Das neuartige Windparkprotokoll ist hinsichtlich der Datenlänge "schlank" und auf Layer 2 im ISO/OSI 7 Schichten Modell angesiedelt.
- Die Erfindung beansprucht die folgenden weiteren Merkmale als erfindungswesentlich:
   - IP (Internet Protocol) lose Kommunikation über Ethernet
   - Kaskadierung von Kommunikationsteilnehmern (Windturm-gruppen) über Subnetze
   - Synchronisation Slave mit Master über das Protokoll
   - Feldbuskommunikation in Form von Block Transfer. (Bei Standard Feldbussen ist immer ein Objektbezug in Verwendung)
   - Automatische Suche von Teilnehmern
   - Online Zu- und Wegschaltung von Teilnehmern und auch Master
   - Automatische Übernahme größerer Mengengerüste
   - Redundanz mit aktiver Kommunikation auf allen Netzwerken bei redundanter Vernetzung

Anhand der folgenden Beschreibung wird nun ein Beispiel für einen Verbindungsaufbau nach der Erfindung gegeben.

### Verbindungsaufbau

Mögliche Slave Zustände:

| **Zustand** | **Beschreibung** |
|---|---|
| INIT | Es findet keine Kommunikation statt. Der Slave kann in diesem Zustand parametriert werden. |
| READY | Die Synchronisierung (Sync-Pakete) wird gestartet, die Slave-Adressauflösung und der Verbindungsaufbau werden durchgeführt. |
| INIT | Der Slave wird gerade durch den Master konfiguriert |
| RUN | Der zyklische Datenaustausch ist aktiv |
| OFFLINE | Die Verbindung zum Master ist unterbrochen |
| ERROR | Der Slave ist im Fehlerzustand (z.B. ungültige Konfiguration) |

Der Master führt beim Verbindungsaufbau folgende Schritte durch:
1. Slave über Name oder IP-Adresse suchen und MAC-Adresse ermitteln
   → eigenes Protokoll
2. Konfigurationsdaten austauschen und prüfen [3015] [4011]
   Zykluszeit, Daten-Längen, Synchronisierung, Timeouts ...
   (dieser Schritt kann bei einem Reconnect übersprungen werden)
   → eigenes Protokoll
3. Synchronisation starten
   → PTP oder Sync-Paket
4. Slave in RUN State setzen
   → Zyklischer Datenaustausch

### Adressierung ("ARP")

Die Adressierung eines Slaves erfolgt über einen konfigurierbaren Slave-Namen oder direkt über die IP-Adresse. Die Adress-Auflösung erfolgt mittels eines Ethernet-Broadcasts. [3010]

Beim Verbindungsaufbau weist der Master jedem Slave eine eindeutige Slave-ID zu, welche anschließend für die Adressierung der Slaves verwendet wird. Dies ist insbesondere für die Kaskadierung notwendig.

### Möglichkeiten Slave Suche

1. Der Master sendet einen Broadcast auf den alle Slaves antworten
   (die Broadcast Sync-Pakete können dazu verwendet werden)
   - Der Master empfängt auch (unnötige) Antworten von Slaves, die ihn nicht interessieren (durch die Einschränkung auf ein SegmentCode sollte das kein Problem sein)
   - Zusätzlich kann die Suche auf einen Slave-Status eingegrenzt werden (z.B. READY oder OFFLINE).
   - Slaves können den Master direkt adressieren
   Diese Methode eignet sich bei der Initialisierung und ist Notwendig, wenn die Slaves unbekannt sind (d.h. alle Slaves in einem Segment suchen) oder für den Bus Scan.
2. Master sendet Broadcast mit Slave-Adresse(n)
   - Eventuell mehrere Broadcasts wenn viele Slaves offline sind
   - In einen Broadcast können einige Slaves gepackt werden: z.B. 38 Slaves bei einem Slave Namen von 20 Zeichen (1400B / 36B)
   - Slaves können den Master direkt adressieren
   Diese Methode eignet sich bei der Initialisierung und wenn eine Applikation Slaves zur Laufzeit hinzufügt (erstmalige Suche).
3. Master sendet Unicast:
   - Keine Broadcasts in Verwendung
   - Slave MAC-Adresse muss bekannt sein
   - Gerätetausch wird nicht erkannt!
   Diese Methode eignet sich um kurzzeitige Verbindungsausfälle sehr schnell zu beheben. Der Master sendet weiterhin in jedem Zyklus ein Reconnect-Paket (oder Daten-Paket). Die Netzwerkauslastung bleibt damit auf dem Niveau wie im operativen Betrieb.

### Synchronisierung

Die Synchronisierung aller Teilnehmer muss optional möglich sein. Idealerweise können die beiden folgenden Mechanismen ausgewählt werden: [2002] [3006]

### PTP (IEEE1588)

Der PTP-Slave regelt die Tickquelle und stellt somit die PTP-Master-Zeit allen Applikationen zur Verfügung: clock_gettime(0x10, &tp).
- Sehr hohe Genauigkeit
- Beim Einsatz von Standard-Switches ohne Boundary-Clock-Funktion schwankt die Laufzeit der PTP-Pakete abhängig von der Netzwerkauslastung. Schwanken die Laufzeiten mehr als ± 50 µs, kann es zu einem kurzen Ausfall der Synchronisation kommen.

### Sync-Pakete (Broadcasts)

Der Master sendet zyklisch einen Broadcast an alle Slaves.
- Ausreichende Genauigkeit
- Beim Ausfall eines Sync-Paketes muss es seinen Ausfallmechanismus geben (lokaler Zeitgeber).
- Eventuell mehrere Sync-Pakete hintereinander um einen Paketverlust abzudecken.

Unabhängig von der Applikation versendet das WPP die Ausgangsdaten erst im nächsten Protokoll-Zyklus bzw. stellt die Eingangsdaten der Applikation zur Verfügung.

Um die **Datenkonsistenz** zu gewährleisten, werden alle Input- und Output-Daten doppelt gehalten.

Beim *Empfangen* eines Paketes wird dieses immer in den Backup-Buffer kopiert und erst im nächsten Zyklus von der Applikation ausgewertet. Beim Zyklusstart erfolgt der Buffer-Wechsel.

Beim *Senden* wird das Paket aus dem Backup-Buffer gesendet während die Applikation neue Werte in den aktuellen Buffer schreibt. Beim Zyklusstart erfolgt der Buffer-Wechsel.

Eigenschaften der erfindungsgemäßen Ethernet-Kommunikation:
- Kein TCP/IP Stack (keine Sockets)
- Einfach und unabhängig (nur eine Transportschicht)
- Kommunikation in der ganzen Broadcast-Domäne (keine Subnetze)
- Login und Benutzerverwaltung nicht zwingend erforderlich
- Sicherheitsmechanismen sind optional möglich und vorgesehen (Login, Authentication und SSL-Verschlüsselung)
- Priorisierung der Realtime-Pakete gegenüber TCP/IP
- Gleichzeitige Standard TCP/IP Kommunikation ohne Beeinflussung des Echtzeitverhaltens
- Multicast Adressierung möglich
- Standard Netzwerk Technologie (Switche, Verdrahtung) und Standard Ethernet Controller bei den Endgeräten (Master und Slave) können eingesetzt werden

Die Erfindung wird nun anhand mehrerer Ausführungsbeispiele beschrieben. Aus dieser Beschreibung ergeben sich weitere Vorteile und Merkmale der Erfindung:

Es zeigen:
**Figur 1**: schematisiert ein Datenübertragungsnetz in Form einer Ringleitung zum Anschluss einer Vielzahl von Windturmgruppen
**Figur 2**: Das Datenmodell der Erfindung
**Figur 3**: Das Ablaufdiagramm bei synchronem Betrieb im Master
**Figur 4**: Das Ablaufdiagramm bei synchronem Betrieb im Master bei Zyklus Vielfache
**Figur 5**: Das Ablaufdiagramm des Slave bei asynchronem Betrieb
**Figur 6**: Das Ablaufdiagramm des Slave im asynchronen Betrieb bei unterschiedlichen Zykluszeiten.
**Figur 7**: Das Ereignismodell bei Ablauf des zyklischen Datenaustausches im Master am Beispiel eines einzelnen Slaves.
**Figur 8**: Das Ereignismodell bei Ablauf des zyklischen Applikationsprogramms (PLC) im Master am Beispiel eines einzelnen Slaves.
**Figur 9**: Das Ereignisprogramm, bei welchem die Slave-Applikation bei synchronem Betrieb durch einen Event-Mechanismus getriggert wird.
**Figur 10**: Das Stack-Schichtenmodell der Erfindung (linke Seite) im Vergleich mit dem OSI-Schichtenmodell nach dem Stand der Technik (rechte Seite) **Figur 11**: Der Aufbau eines Ethernet-Frames nach der Erfindung
**Figur 12**: Darstellung eines VLAN Tags
**Figur 13**: Darstellung des Slave-Master-Prinzips bei Kaskadierung
**Figur 14**: Darstellung der Slave-Instanz in einem Ethernet-Frame bei Kaskadierung
**Figur 15**: Darstellung des Master-Master-Prinzips, bei dem jeder Master mit dem anderen Master kommunizieren kann bei Kaskadierung.
**Figur 16**: Ablauf im Windparkprotokoll Master bei synchronem Betrieb
**Figur 17**: Ablauf im Windparkprotokoll Slave bei asynchronem Betrieb
**Figur 18**: Ablauf im Master mit TCP/IP Datenverkehr

Figur 1 zeigt einen Parkmaster 30, dem gegebenenfalls weitere Parkmaster 31 usw. parallel geschaltet sein können. Die vorhandene CPU besteht aus Modulen, die später als Grid-Control, Park Scada und Service erläutert werden. Über bidirektional wirkende Signal- und Datenpfade ist der Parkmaster 30, 31 mit dem jeweils zugeordneten Kopplungsmodul 32 verbunden, das die Verbindung mit der zentralen Ringleitung 40 herstellt. In der Ringleitung ist entsprechend der Anzahl der angeschlossenen Windpark-Einheiten 33-37 eine gleiche Anzahl von Kopplungsmodulen 32 vorhanden. Jede Windparkgruppe 33-37 weist eine eigene zentrale Parkringleitung 39, an der über nicht dargestellte Kopplungseinheiten die einzelnen WKA 38 angeschlossen sind. Wichtig ist, dass das erfindungsgemäße Windparkprotokoll (WPP 50) mit dem neuartigen WPP-Realtime-Treiber 49 sowohl den Datenverkehr auf der zentralen Ringleitung 40, als auch auf der Parkringleitung 39 und auch den Datenverkehr zwischen den WKA 38 und der Parkringleitung 39 ausführt.

Figur 2 zeigt das Datenmodell nach der Erfindung. Die Master-Applikation 23 ist im Parkmaster angeordnet. Die Slave-Applikationen 27 sind in den WKA 38 angeordnet. Der WPP-Datencache (Master) 28 ist der Master-Applikation 23 zugeordnet, während der WPP-Datencache (Slave) 29 der Slave-Applikation 27 zugeordnet.
Schritt 1: Die Master-Applikation 23 schreibt die Ausgangsdaten (in den WPP Datencache 28)
Schritt 2: Das WPP 28 sendet im nächsten Zyklus die Ausgangsdaten zum Slave (dort an das WPP 29)
Schritt 3: Die Slave-Applikation 27 liest die Eingangsdaten (aus dem WPP Datencache 29)
Schritt 4: Die Slave-Applikation 27 schreibt die Ausgangsdaten (in den WPP Datencache 29)
Schritt 5: Das WPP 29 sendet im nächsten Zyklus die Ausgangsdaten zum Master (dort an das WPP 28)
Schritt 6: Die Master-Applikation 23 liest die Eingangsdaten (aus dem WPP Datencache 28)

Die Figur 2 zeigt, dass eine Vielzahl von Slave-Applikationen 27a bis 27n parallel geschaltet sind. Der Datenverkehr erfolgt mit diesen weiteren Slave-Applikationen 27a-27n.
Die Slave-Applikationen 27, 27a-n arbeiten in zwei verschiedenen Betriebsmodi:

### Slave 27: Synchroner Betrieb:

Anhand der Figur 3 ist auf der Ordinate die Applikation 27, 27a-n aufgetragen und darunter das Protokoll PROT. Die Applikation 27, 27a-n erzeugt Daten entsprechend dem Block 1 gleichzeitig läuft das Protokoll mit seinem Dienst Daten zu versenden, wobei bei 2 ein Startbefehl (Sync-Signal) zu allen Windtürmen gegeben wird, bei 3 wird ein Datenpaket zu einem Windturm geschickt und 4 ist ein anderes Datenpaket, welches zu einem anderen Windturm geschickt wird.

Gleichzeitig kommt bei 5 von einem dieser Türme das Input-Datenpaket und darauf folgt bei 6 von dem anderen Windturm ebenfalls ein Input-Datenpaket. Die von der Applikation entstandenen Daten werden über den Richtungspfeil 7 beim nächsten Zyklus übernommen, wie es in Figur 3 auf der rechten Seite angegeben ist und zwar als Ausgangsdaten. Die Windtürme bekommen dann die Daten, welche die Applikation im Block 1 erstellt hat. Diese Daten werden in Form von Datenpaketen wiederum an die einzelnen Windtürme verteilt, wobei z. B. das Datenpaket 3 der eine Windturm und das Datenpaket 4 der andere Windturm bekommt.

Ebenso erfolgt wiederum ein Empfang von Input-Datenpaketen und Datenpaketen 5 und 6 von anderen Windtürmen.

Was als Input (linke Seite der Figur 3) empfangen wurde, wird über den Richtungspfeil 8 an die Applikation gegeben, welche daraus diese Daten verarbeitet und als Block 9 bereithält und zwar für die Versendung in der gleichen Weise wie sie anhand der Figur 3 auf der linken Seite beschrieben wurde.

Der Übertragungszyklus mit dem Block 9 entspricht also dem Zyklus mit dem Block 1.

Die Figur 4 enthält die gleichen Erläuterungen wie Figur 3, nur dass erkennbar ist, dass wenn mehrere Applikationen Datenpakete 1, 1a produzieren, dass dann ebenfalls eine entsprechende Übertragung dieser Daten entsprechend den Richtungspfeilen 7a, 7b erfolgt und umgekehrt auch bezüglich der Eingangsdaten 5, 6 ggf. auch eine entsprechend gegabelte Übertragung mit den Richtungspfeilen 8a, 8b erfolgt.

### Slave 27: Asynchroner Betrieb:

Figur 5 zeigt, dass wenn die Applikation einen Block 1 erzeugt, der asynchron zu der Protokollschicht läuft, dass dann jeweils im nächstmöglichen Zyklus die Daten übernommen werden, so wie dies die Richtungspfeile 7 und 8 darstellen.

Die Figur 6 zeigt einen extremen Fall, dass beim Start eines Zyklus gerade eine Applikation einen Datenblock erzeugt und in diesem Fall muss die Kollision von Datenblöcken vermieden werden. In Figur 6 ist deshalb dargestellt, dass es ein Umkopieren eines Buffer-Inhaltes notwendig ist, weil das Synchronsignal 2 nun mittig zu einem Datenblock 1a liegt und deshalb der Inhalt des Datenblockes als A verworfen wird und auf eine spätere Zykluszeit verschoben wird.

### Master 23:

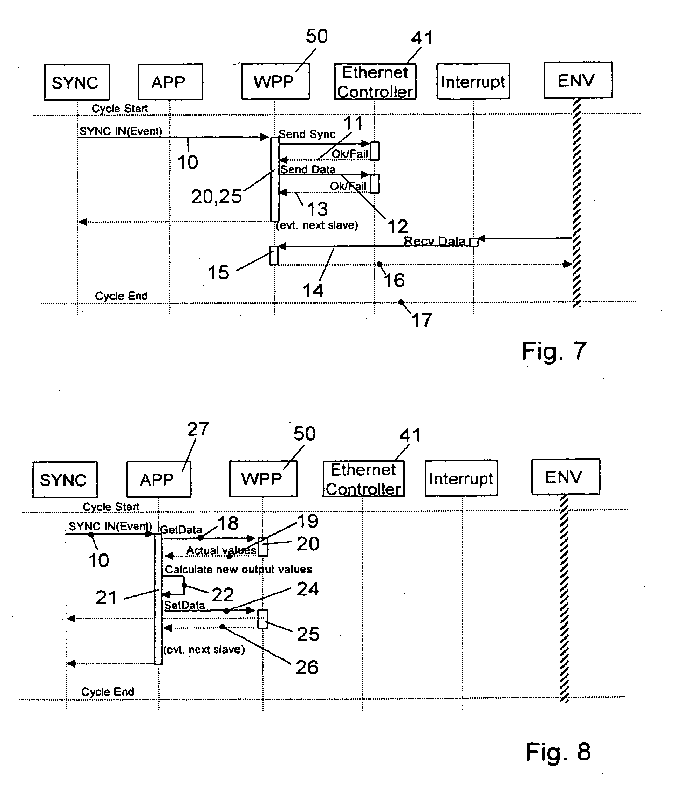

Die Abbildung 7 zeigt schematisch den Ablauf des zyklischen Datenaustausches am Beispiel eines einzelnen Slaves 27, 27a-n. Das WPP 50 sendet und empfängt alle Slave-Daten, die in einem internen Cache 28, 29 abgelegt sind.

Die Abbildung 8 zeigt schematisch den Ablauf eines zyklischen Applikationsprogramms (PLC) im Master am Beispiel eines einzelnen Slaves. Das WPP 50 legt die Applikationsdaten in einem internen Cache ab.

Der IO-SYNC (zyklischer Interrupt in der Steuerungs CPU) triggert sowohl Applikation als auch das WPP 50. Dadurch kann gewährleistet werden, dass sich der Jitter von Applikation und WPP 50 innerhalb eines Zyklus nicht addieren. Je nach Priorität wird das entsprechende "Programm" ausgeführt.

### Slave 27:

Die Slave Applikation 27, 27a-n wird bei synchronem Betrieb durch einen Event-Mechanismus getriggert auf Basis des Sync-Pakets vom Master 23. Der IO-SYNC nicht möglich, da dieser geregelt werden müsste.

Direkt nach dem Empfangen der Eingangsdaten werden die Ausgangsdaten gesendet.

Aus der Figur 7 ergibt sich die zeitliche Zusammengehörigkeit der einzelnen Module nämlich im Syncmodul IO-SYNC, im Applikationsmodul APP, im Protokollmodul WPP 50, im Ethernet Controller 41, im Interruptmodul und das Eventmodul ENV, welches auslöst, um andere Ereignisse zu synchronisieren.

Man sieht jeweils die Zeitachse unter den einzelnen Modulen als vertikale Linie und mit der ersten Linie 10 wird das Sync-Paket versendet und damit das Protokollmodul WPP 50 angestoßen. Dieses sendet nun über den Ethernet Controller 41 einen Befehl "send Sync" und dieser antwortet mit einem entsprechenden Signal auf das WPP 50 und dieses wiederum wird durch das Signal 11 angestoßen und sendet ein Signal 12 an den Ethernet Controller 41, wobei die Daten nun gesendet werden, wie dies im Pfeil bei Signal 12 erkennbar ist.

Wenn der Ethernet Controller 41 fertig ist, sendet er ein Signal 13 mit dem die Datenübertragung abgebrochen oder beendet wird.

Im Windparkprotokoll WPP 50 werden die Empfangsdaten über den Signalpfad 14 ausgewertet, wenn die Auswertung 15 abgeschlossen ist, wird ein Signal 16 erzeugt zur Auswertung eines Zyklusabschlusses an das Eventmodul ENV.

Damit ist der Zyklus beendet und zwar an der Linie 17 und es kann dann ggf. ein neuer Zyklus sich anschließen.

In der Figur 8 ist nun der zeitliche Ablauf in der Applikationsschicht (Applikationsmodul APP) dargestellt. Wiederum über ein Signal 10 wird von der Sync-Einheit IO-SYNC das Applikationsmodul APP angestoßen mit dem Befehl Daten zu empfangen über den Befehl 18 (GetData) werden aus dem WPP-Protokoll 50 die Daten aus dem Block 20 entnommen und über den Signalpfad 19 in den Datenblock 21 eingelesen.

In diesem Datenblock 21 ist ein Regelungszyklus der Applikation APP enthalten (Regelungszyklus 22) und es werden die Daten in Datenblock 21 entsprechend unter Einwirkung der Applikation APP aufbereitet.

Über den Signalpfad 24 werden die Daten an das WPP-Protokoll 50 als Datenpaket 25 übergeben und bei erfolgreicher Speicherung über das Signal 26 an die APP signalisiert.

Die Figuren 7 und 8 zeigen also zwei verschiedene Schichten oder Abläufe des erfindungsgemäßen Schichtenmodells.

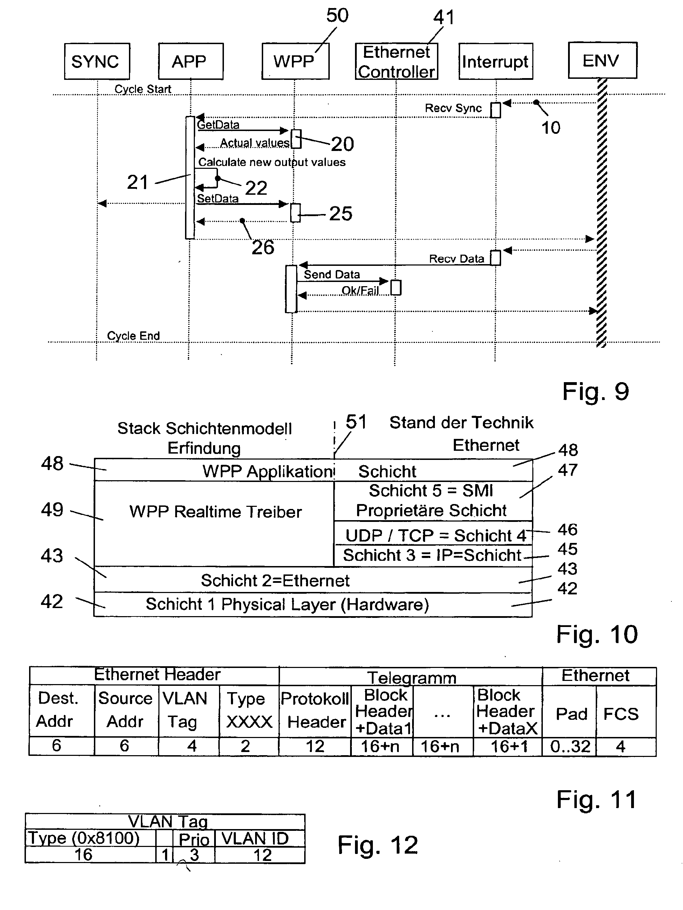

Die Figur 9 zeigt den gleichen Ablauf, der anhand der Figur 7 geschildert wurde für einen Slave, wobei die gleichen Abläufe mit den gleichen Zahlen versehen wurden.

Es gilt deshalb die oben stehende Beschreibung.

In diesem Fall wird von dem Windturm über das Modul ein Signal an der Linie 10 erzeugt und dem Interruptmodul mitgeteilt, wonach dieses die Daten dem Datenblock 21 des WPP 50 einspeist.

Es werden also in der Slaveeinheit Daten empfangen, dann verarbeitet der Slave im Applikationsmodul die Daten im Datenblock 21 mit dem Regelungszyklus 22 und sendet die aufbereiteten Daten im nächsten Zyklus wiederum als Datenfragmente an das WPP-Modul 50 zurück.

Die Figur 10 zeigt nun, das erfindungsgemäße Schichtenmodell, wo erkennbar ist, dass auf der rechten Seite (rechts der Trennlinie 51 ist der Stand der Technik dargestellt) die Schichtbestandteile 42 bis 48 vorhanden sind. Ausgehend von der Hardwareschicht 42 (Schicht 1 des OSI-Modells), schliesst sich die Ethernet-Kontrollschicht 43 (Isonet-Controller) als Schicht 2 des OSI-Modells an. Darüber schliesst die IP-Schicht 45 (Schicht 3 im OSI-Modell) an. Darüber liegt die UDP/TCP-Schicht 46 als Schicht 4 des OSI-Modells an. Darüber liegt die RPC-Schicht 47 als Schicht 5 des OSI-Modells an. Darüber liegt die WPP-Applikation-Schicht 48 entweder als Master-Applikation 23 oder als Slave-Applikation 27.

Erfindungsgemäß (linke Seite der Figur 10) entfallen nun mindestens die Schichten 45, 46 und 47 (also die Schichten 3, 4 und 5 des OSI-Modells) und ein erfindungsgemäßer WPP Realtime-Treiber 49 überbrückt die Schichten 3, 4 und 5 des OSI-Schichtenmodells. Das erfindungemäße WPP 50 besteht demnach nur aus den vier Schichten 42, 43, 49 und 48, also den Schichten 1, 2 des OSI-Modells und einem die Schichten 3, 4 und 5 überbrückenden WPP Realtime Treiber 49.

Erfindungsgemäß unterscheidet sich deshalb das erfindungsgemäße WPP-Protokoll von den bekannten Ethernet-Protokollen durch Wegfall der Schichten RPC, UDP/TCP und IP im OSI-Modell.

Hier liegt der Vorteil der vorliegenden Erfindung, denn durch den Wegfall dieser drei Schichten 45, 46, 47 wirkt das erfindungsgemäße WPP-Protokoll 50 wesentlich schneller, ist echtzeitfähig und deterministisch und kann mehr Teilnehmer bedienen. Zudem ist die Möglichkeit der Verwendung von Netzwerk Sicherheitsmechanismen und Standard Netzwerk Komponenten (Switche, Vernetzung, etc.) gegeben.

Dies war bisher aus dem Stand der Technik nicht bekannt.

In Figur 11 sieht man den Aufbau eines erfindungsgemäßen Paketes, wo die grau oder schraffiert gezeichneten Teile dem üblichen Ethernet-Protokoll zugehören und die nicht schraffierten Teile erfindungsgemäße Teile des neuartigen WPP-Protokolls sind.

Wichtig hierbei ist, dass durch den Wegfall der oben genannten drei Schichten (siehe Figur 10) nun ein Telegramm erzeugt wird, dass aus einem Protokoll besteht und ein oder mehreren Datenblöcken, wie sie bisher in dieser Einfachheit nicht aus dem Ethernetprotokoll entnehmbar waren.

### Ethernet Frame

Aufgrund der Kaskadierung (und der Slave-Suche) sind mehrere Daten Pakete pro Telegramm erforderlich. Passen nicht alle Slaves in ein Telegramm, werden mehrere Telegramme direkt aufeinanderfolgend übertragen. Dies ergibt sich aus Figur 11.

Das Ethernet Frame beinhaltet ein VLAN Tag zur Priorisierung der Echtzeit-Pakete, siehe Figur 12.

Das Windprotokoll kann verschiedene Prioritäten für die zyklische Realtime Kommunikation und die azyklischen Kontrollkommandos verwenden.
Um Fehler mit Fremdpaketen zu vermeiden wird ein eigener WPP Protokoll-Typ verwendet.

Im **Protokoll Header** sind allgemeine Protokoll-spezifische Informationen enthalten:
- Protokoll Version
- Flags (Call/Reply, weitere Frames, Redundanz, Gateway, Diagnose...)
- Format (Verschlüsselung, Endian...)
- Anzahl Datenpakete
- Gruppen- oder Segmentcode
- Authentication Code (Flavor + Len), vorerst immer 0

Im **Block Header** sind Slave-spezifische Informationen enthalten:
- Slave-ID (0 oder -1 adressiert alle z.B. Sync Pakete)
- Transaktions-ID (Zykluszähler; Zuweisung Reply zu Call)
- Kommando (Connect, Cyclic, Read, Write, Sync, Search...)
- Slave Status (Run, Stop, Error...)
- Flags (Block Valid/Empty, weitere Frames...)
- Timestamp (Zeitpunkt zu dem die Applikation Daten vorgibt; PTP Clock)
- Länge des Datenblocks
- Fragment Offset, vorerst immer 0

Nach dem Block Header folgen die **Daten**:
- Daten → Alignment!

In dieser WPP Version ist eine Slave Instanz auf 1400 Bytes Daten begrenzt. Der *Fragment Offset* (im Block Header) sieht eine Fragmentierung der Slave Daten als zukünftige Erweiterung vor.

Mit zusätzlichen *Kommandos* (im Block Header) kann einfach eine azyklische Kommunikation realisiert werden. Im Datenbereich sind die Argumente, Daten und Error-Codes untergebracht. Dadurch können in Zukunft auch verschiedene Geräteprofile implementiert werden.

Die MTU (Maximum Transmission Unit) ist bei Ethernet II auf 1518 Bytes festgelegt. Bei Gigabit Ethernet kann es durchaus sinnvoll sein, sogenannte Jumbo Frames (> 1518 Bytes) zu verwenden um den Protokolloverhead und die CPU-Last zu minimieren. Da es für solche Pakete jedoch keinen Standard gibt, muss getestet werden ob alle Netzwerkelemente mit Jumbo Frames umgehen können. Theoretisch sind Pakete bis 64k (IPv4 Limit) möglich, praktisch ist eine Größe bis 12000 Bytes sinnvoll, da anschließend die CRC Berechnung nicht mehr effizient ist.

Besonders für die Kaskadierung sind Jumbo Frames sehr interessant. Deshalb werden diese im WPP berücksichtigt.

Der Kern der vorliegenden Erfindung liegt darin, dass gem. Figur 10 nun bestimmte Schichten des Ethernet-Protokolls weggelassen wurden und stattdessen eine direkte Übertragung zwischen den verbleibenden Schichten stattfindet. Hier zeichnet sich die Erfindung gegenüber den bekannten anderen Netzen aus, denn bei anderen Netzen wie z. B. Profinet, Powerlink sind jeweils aufwendige Schichten statt der weggelassenen Schichten nach dem WPP-Protokoll vorgesehen, was wiederum mit dem Nachteil verbunden ist, dass der Datenverkehr zwischen den verschiedenen Schichten aufwendig ist und deshalb die Vorteile der vorliegenden Erfindung und des neuartigen WPP nicht erreicht werden.

### Figur 13 :

### Slave/Master Prinzip bei Kaskadierung

Der Master2 verbindet sich wie üblich zu den Slaves3-5 (53). Zusätzlich stellt der Master2 einen Slave zur Verfügung, welcher mit dem Master1 kommuniziert. Die Applikation (52) ist das Bindeglied zwischen Master und Slave und hat alle Daten zu kopieren und Statusübergänge auszuwerten.

Alle Daten sind in einer Slave Instanz 54 zusammen gefasst. Die Slave Instanz muss in ein Ethernet Frame passen!

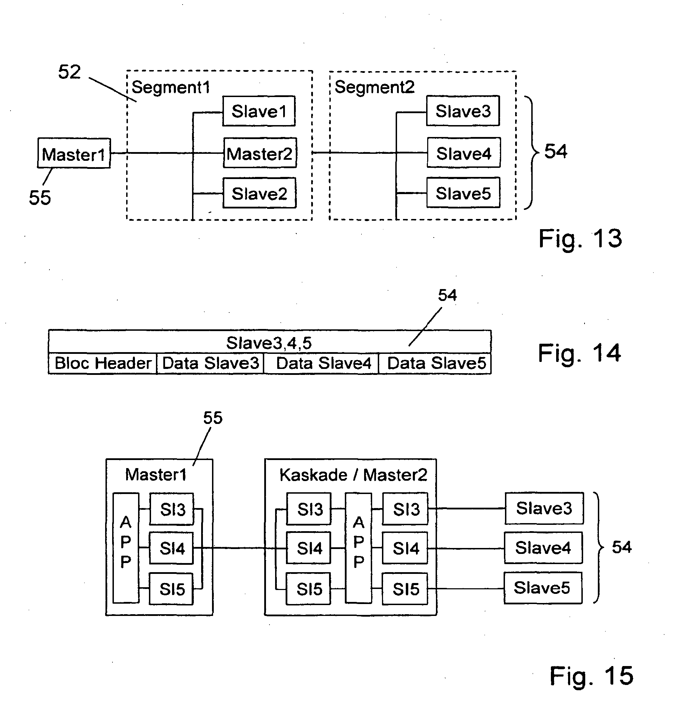

Figur 14 zeigt die Anordnung im Ethernet Frame.
- Der Master1 55 sieht nur mehr einen Slave!
- Durch die zusätzliche Applikation (auf Master2) kommen alle Datenpakete einen Zyklus verzögert bei der Gegenstelle an!
   → Evt. Kopplung über fixen Delay (Applikation verzögern)
   → Oder unmittelbar nach Abschluss der Applikation Daten senden (innerhalb Zyklus)
- Der Master1 hat keinen direkten Zugriff auf die Slaves3-5.
- Die Synchronisierung ist über das gesamte Netzwerk gewährleistet.

Die Unterscheidung der 2 Master in einem Netz erfolgt durch den SegmentCode.

### Figur 15 zeigt das Master/Master-Prinzip bei Kaskadierung

Jeder Master kann direkt mit einem anderen Master kommunizieren, d.h. der Master1 kann sich auf die Slave3-5 im Master2 verbinden. Die Adressparameter (IP, Name) werden vom Slave übernommen.
- Der Master1 muss die Anzahl möglicher Slaves im Ethernet Frame berechnen (Input- und Output-Daten).
- Der Master2 muss zuerst eine Verbindung zu den Slave3-5 aufbauen. Erst dann liegen alle Adressparameter vor.
- Die Kaskade spiegelt alle Slaves, d.h. es werden jeweils zwei Instanzen eines Slaves angelegt. Dies ist für die beidseitige Kommunikation notwendig. Die Applikation hat wiederum alle Daten zu kopieren und Statusübergänge auszuwerten. Die zusätzliche Funktion GetGatewaySlave() liefert ein Handle auf einen "gespiegelten" Slave (rot/links eingezeichnet). Oder die bestehende Funktion GetSlave() mit speziellem Adress-Parameter (z.B. "gateway:MySlave").
- Alternativ ist auch eine direkte Weiterleitung von Status-Informationen und Daten möglich.
- Die Synchronisierung ist über das gesamte Netzwerk gewährleistet.

Die Slaves im Master2 müssen dem Segment von Master1 zugewiesen werden.

Die folgenden Funktionen sind für die Master- und Slave-Applikation

Die Anbindung an die Applikation ist auf Paketbasis. Nur die Applikation kennt den Inhalt. Der Austausch der Daten erfolgt über einen Kopiervorgang (keine Pointerübergabe). [2004]

Nachfolgend werden die einzelnen Module, die vorstehend erwähnt wurden, in den Zeichnungen wiedergegeben werden, erläutert:

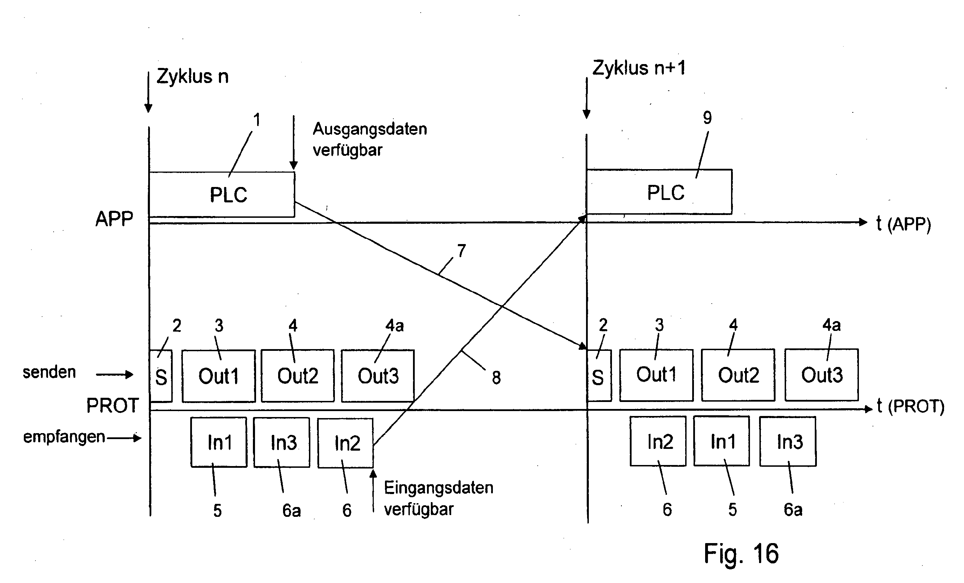

Figur 16 offenbart den Ablauf im Windparkprotokoll Master bei synchronem Betrieb wie folgt:

In dieser Figur 16 sind waagrecht 2 Zeitachsen t(APP) und t(PROT) aufgeführt, eine für die Applikationssoftware (APP) und eine für das Windpark-Protokoll (PROT). Es sind 2 Zyklen im Master mit der Bezeichnung "n" und "n+1" eingezeichnet, der Start eines jeden Zyklus ist ein senkrechter Strich. Beim synchronen Betrieb starten die Applikation und das Protokoll gleichzeitig den Programmdurchlauf.

Das Applikationsprogramm, bezeichnet als PLC (Pos. 1 oder 9) berechnet alle Ausgangsdaten und übergibt diese am Ende des Durchlaufs an die Protokollschicht zur Weiterleitung an alle Slaves. Dies ist durch den Pfeil 7 nach unten vom "PLC" nach "S" (Pos. 2) angedeutet.

Im Windpark-Protokoll (PROT Achse) wird alles was oberhalb der Zeitachse t(PROT) gezeichnet ist gesendet und alles unterhalb der Zeitachse t(PROT) empfangen. Zum Start des Zyklus wird vom Master ein spezielles Sync-Paket für alle Slaves über ein Multicast oder Broadcast versendet, in Figur 16 der Block mit der Bezeichnung "S" (Pos. 2). Dieses Sync-Paket wird von allen Slaves quasi gleichzeitig empfangen. Danach werden je Slave die Ausgangsdaten hintereinander versendet, in Figur 16 die Blöcke mit der Bezeichnung Out1, Out2 und Out3 für 3 Teilnehmer (Pos. 3, 4 und 4a). Gleichzeitig werden sofort nach Empfang des Sync-Paketes von jedem Slave die Eingangsdaten an den Master versendet, in Figur 16 die Blöcke mit der Bezeichnung In1, In2 und In3 (Pos. 5, 6 und 6a). Die Eingangsdaten können in beliebiger Reihenfolge eintreffen. Sobald alle Eingangsdaten eingetroffen sind, können diese von der Applikationssoftware abgerufen werden. Dies erfolgt zum Start von Zyklus "n + 1", angedeutet durch den Pfeil 8 nach oben von 6 (In2) nach 9 (PLC).

Im darauffolgenden Zyklus wiederholt sich das Ganze wie oben beschrieben.

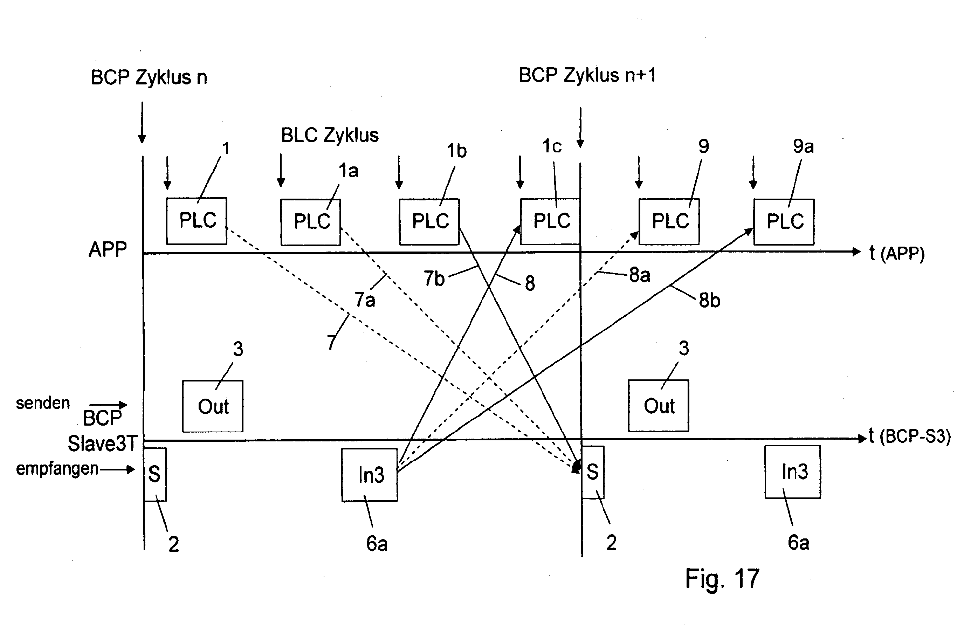

Figur 17 offenbart den Ablauf im Windparkprotokoll Slave bei asynchronem Betrieb wie folgt:

In dieser Figur 17 sind waagrecht 2 Zeitachsen t(APP) und t(BCP-S3) aufgeführt, eine für die Applikationssoftware (APP) und eine für das Windpark-Protokoll (BCP Slave3). Es sind 2 Zyklen mit der Bezeichnung "n" und "n+1" eingezeichnet, der Start eines jeden Zyklus ist ein senkrechter Strich. Im asynchronen Betrieb starten die Applikation und das Protokoll NICHT gleichzeitig den Programmdurchlauf, beide Abläufe haben eigene, nicht synchrone Zykluszeitgeber (BCP Zyklus und PLC Zyklus).

Das Applikationsprogramm im Slave, bezeichnet als PLC (Pos. 1, 1 a, 1 b und 1 c) berechnet die Ausgangsdaten des Slaves und übergibt diese am Ende des Durchlaufs an die Protokollschicht zur Weiterleitung an den Master. Die Protokoll-Schicht leitet diese Daten erst im nächsten BCP Zyklus an den Master weiter. Die Slave-Ausgangsdaten werden somit solange überschrieben, bis der nächste BCP Zyklus startet. Dies ist durch die strichlierten Pfeile 7, 7a, 7b nach unten von "PLC" nach "S" angedeutet.

Im Windpark-Protokoll (BCP Slave3 Achse) wird alles was oberhalb der Zeitachse t(BCP-S3) gezeichnet ist gesendet und alles unterhalb der Zeitachse t(BCP-S3) empfangen. Der Zyklus startet beim Empfang des Sync-Paketes "S" (Pos. 2) vom Master. Danach werden vom Slave die Ausgangsdaten an den Master versendet, in Figur 17 der Block mit der Bezeichnung Out (Pos. 3). Es werden die zuletzt übergebenen Daten versendet. Dies ist durch den durchgehenden Pfeil 7b nach unten vom "PLC" Pos. 1 b nach "S" Pos. 2 angedeutet.

Nach Empfang der Eingangsdaten vom Master (in Figur 17 der Block mit der Bezeichnung In3 (Pos. 6a) können diese von der Applikationssoftware beim nächsten PLC Zyklus abgerufen werden. Alle nachfolgenden PLC Zyklen erhalten solange dieselben Daten, bis durch das Windpark-Protokoll neue vorliegen. Dies ist durch die strichlierten Pfeile 8, 8a, 8b von unten nach "PLC" Pos. 9 und 9a angedeutet.

Im darauffolgenden Zyklus wiederholt sich das Ganze wie oben beschrieben.

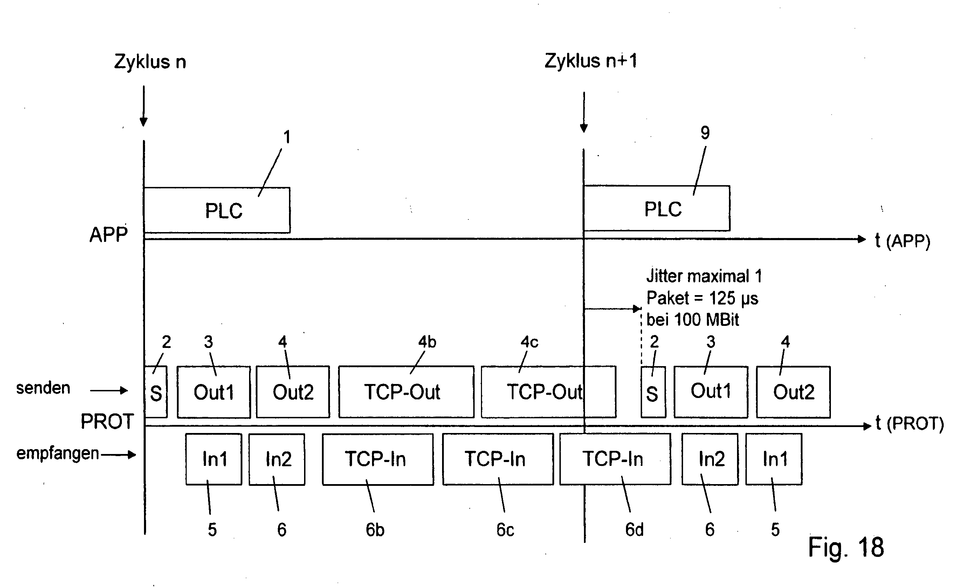

Figur 18 offenbart den Ablauf im Master mit TCP/IP Datenverkehr wie folgt:

In dieser Figur 18 ist der Ablauf im Master bei synchronem Betrieb so wie in Figur 17 beschrieben. Es sind allerdings nur 2 Slaves als Teilnehmer aufgeführt und es ist zusätzlich ein TCP/IP Datenverkehr eingezeichnet. Der TCP/IP

Datenverkehr ist neben dem Echtzeit Datenverkehr (Windpark-Protokoll) möglich und ist für den Austausch von Files oder sonstiger niederrangiger Kommunikation notwendig. Dieser TCP/IP Datenverkehr (Blöcke TCP-Out mit Pos. 4b, 4c und TCP-In mit Pos. 6b, 6c, 6d) kann all das belegen, was im Windpark-Protokoll nach der Versendung und dem Empfang aller Echtzeit Pakete übrig bleibt.

Wenn ein Ethernet-Paket sich im Transport befindet, kann dies nicht abgebrochen werden. Der Transport (senden oder empfangen) von maximal einem Datenpaket muss abgewartet werden. Bei einem 100 MBit Ethernet beträgt die maximale Paketlaufzeit 125 µs. Daher kann im Extremfall ein Jitter von bis zu 125 µs in beide Richtungen je Netzwerk Verbindung entstehen (Master zu Switch, Switch zu Switch oder Switch zu Slave sind jeweils eine Verbindung). Dieses Verhalten ist hier symbolhaft für den Master grafisch dargestellt.

### Akteure (siehe Figur 1)

### Park-Server

| **Akteur** | **Funktion** |
|---|---|
| Applikation | Überwacht Kommunikation zu den Türmen, stellt Daten für SCADA, Service, Gridstation bereit, übernimmt Sollwerte und Befehle von der Netzleitstelle und übergibt diese dem Parkprotokoll zum Transport an die einzelnen WKA |
| Applikation | Errechnet Sollwerte und Befehle für die einzelnen WKA aus den Vorgaben der Netzleitung und der Netzsituation |
| | |

### Windturm

| **Akteur** | **Funktion** |
|---|---|
| Applikation | Erledigt die gesamte Betriebsführungssteuerung, Regelung, Datenerfassung und Protokollierung in der Windkraftanlage |
| | |
| | |

### Grid Control

| **Akteur** | **Funktion** |
|---|---|
| Applikation/Datenschnittstelle | Liefert aktuelle Netzzustände und übergeordnete Sollwerte für den Park |

### Park SCADA

| **Akteur** | **Funktion** |
|---|---|
| Applikation | Visualisiert den Park (Bedienen und Beobachten) |
| | Datenerfassung/Speicherung |
| | Optional: Stellt (eine Auswahl von) Daten für Dritte (Betreiber, Shareholder, Servicestellen...) bereit |

### Netzwerk

| **Akteur** | **Funktion** |
|---|---|
| Geräte (Hardware/Firmware/Kabel) | Übertragungsleitung (10 / 100 / 1000 MBit) |
| | Switches (genauere Klassifikation erfolgt durchKunden); mehrere kaskadiert; Ringredundanz möglich (SpanningTree); |
| | Optical Link Modules (Übersetzer von Cu 10/100/1000 auf LWL bzw. zurück); Meist in Swiches integriert. |
| | Firewalls (möglich) |
| | Router (möglich) |

Nachfolgend werden die Systemspezifikationen der Erfindung erläutert:

### System - Spezifikationen

### Schnittstelle Software

Die Schnittstellen zur Applikationssoftware sollen einfach und performant sein. Die Applikationssoftware kann entweder in "C/C++" oder vorzugsweise in IEC61131-3 erstellt worden sein. Die Applikation schreibt den Inhalt des ausgehenden Datenblocks oder liest den Inhalt des empfangenen Datenblocks. Die Kopplung Applikation zum Treiber des Windpark Protokolls erfolgt via Funktion. Wichtig ist hier die Beachtung der Datenkonsistenz in beide Richtungen. Wenn die Applikation den Dateninhalt liest oder verändert darf nicht gleichzeitig die Kommunikation erfolgen.

Die Zuordnung von Slaves im Master-Treiber muss einfach und immer reproduzierbar sein, egal wie der Bootvorgang ist.
Obige Lösung über direkte Abhandlung in der Applikation ist die Vorgangsweise für eine im höchsten Maße performante Lösung. Als weiteres Ziel ist die Möglichkeit vorzusehen, das Kommunikationssystem per Konfiguration ohne Änderung/Neucompilation der Applikationen der WKA einzurichten. Hierzu ist erfindungsgemäß ein Konzept erarbeitet worden:
- Konfiguration der Kommunikation per grafischer Oberfläche (mit Target-und Variablen-Browsing) zentral am Parkmaster
- Validierung wesentlicher Randbedingungen und Konsistenzen bereits anhand der Konfiguration (z.B. passt die Menge an Daten je Windturm x Anzahl Windtürme überhaupt zur Zykluszeit)
- Konfiguration von einzelnen WKA oder ganzen Gruppen mit einheitlicher Datenschnittstelle
- Übertragung der Kommunikationskonfiguration an alle Teilnehmer (WKA) über Standard Ethernet.
- Übernahme der Kommunikationskonfiguration durch alle Teilnehmer ohne Reboot der WKA
- Aufnahme der zyklischen Kommunikation auf initiative des Parkmasters (Timing messen, Init, Synchronisation, Hochlauf,....)

### Funktionale Anforderungen

Die Bezeichnung "Sunny-Day" steht für den Normalfall und die Bezeichnung "Rainy-Day" steht für den Fehlerfall.

### Allgemeine Funktionen

| **Allgemeine Funktion "Sunny-Day"** | |
|---|---|
| 1001 | Eine Steuerung muss gleichzeitig Master und Slave sein können. |
| 1002 | Kaskadierung von mehreren Mastern zu einem weiteren Master soll möglich sein. Damit kann die Anzahl der Slaves gesamthaft höher ausfallen. |
| 1003 | Slaves sollen online hinzufügbar sein und nach einigen Zyklen automatisch in die Kommunikation mit eingebunden sein. |
| 1005 | Die Bootreihenfolge (Master vor Slave oder umgekehrt) darf keine Auswirkung auf die Funktionsweise haben. |

| **Allgemeine Funktion "Rainy-Day"** | |
|---|---|
| 1101 | |

### Anwender API Funktionen

| **Anwender API Funktionen "Sunny-Day"** | |
|---|---|
| 2001 | Der Status der angeschlossenen Slaves muss jederzeit abfragbar sein (Online, Anzahl fehlender Pakete, maximale Responsezeit, ..) |
| 2002 | Eine Synchronisation aller Teilnehmer (Slaves mit dem Master) um Schwebungen bei der Eventkette zu vermeiden muss optional möglich sein. Die Synchronisation muss besser als 1/10 der Zykluszeit sein. |
| 2003 | Als Applikationssprache muss primär IEC 61131-3 und sekundär C/C++ und auch Java unterstützt werden. |
| 2004 | Die Anbindung an die Applikation muss einfach und auf Paketbasis sein. Die Applikation sendet und empfängt immer einen gesamten Datenblock. Ein Austausch von Pointern zu den Datenbereichen zwischen Applikation und Windpark Protokoll Treiber ist erlaubt, unnötige Kopiervorgänge von Buffern sind zu vermeiden. |
| 2005 | Einzig die Applikationen in der Master- und Slave-Steuerung kennen den Inhalt der Datenpakete, dem Windpark Protokoll Treiber sind die Nutzdaten nicht bekannt. |
| 2006 | Für IEC 61131-3 Applikationen muss optional das CoDeSys Konzept der Netzwerk Variablen vorgesehen werden. Die Integration von Netzwerk Variablen im Laufzeitsystem von M-PLC ist nicht Teil dieses Projektes und soll später in einem Nachfolgeprojekt erfolgen. Info dazu siehe Anhang "Netzwerkvariablen". |
| 2007 | Die Zuordnung der Slaves (IP-Adresse oder CPU-ID des Slaves) muss immer eindeutig und unabhängig vom Bootvorgang reproduzierbar sein. |
| 2009 | Die Definition der je Teilnehmer zu übertragenden Daten muss auch zentral (am Master) und konfigurativ in einer zukünftigen Version erfolgen können (Auswahl von Steuerungen und Variablen; Eine "Art" Prozessabbild). Das Befüllen des Transportprotokolls aus der Applikation heraus ist für die Erstversion für extreme Performance Anforderungen vorzusehen. |

| **Anwender API Funktionen "Rainy-Day"** | |
|---|---|
| 2101 | Eine Mehrfachbelegung von bereits vergebenen Slave Adressen muss erkannt und gemeldet werden. |

### Kommunikationsfunktionen

| **Kommunikationsanforderungen "Sunny-Day"** | |
|---|---|
| 3001 | Um die Echtzeitprobleme des TCP/IP Stacks umgehen zu können, soll dies als Transportschicht nicht verwendet werden. Es ist ein eigener Standard in Anlehnung an UDP direkt auf dem Data Link Layer notwendig (so wie bei Profinet RT) |
| 3002 | Das Protokoll muss für normale Vernetzung (Topologie sternförmige oder ringförmig mit mehreren Ringen, handelsübliche Switches mit VLAN Technik, QoS) vorgesehen werden. Spezielle proprietäre Switches sind nicht notwendig. |
| 3003 | Ethernet Multipakete sollen möglich sein, um Nutzdatenpakete > 1500 Bytes übertragen zu können |
| 3004 | Eine "One to Many" Beziehung (1 Master und mehrere Slaves) muss möglich sein. Querkommuni-kation zwischen den Slaves ist nicht notwendig. Für Quer-Kommunikationen zwischen Slaves kann der Master als Gateway (Forwarding) verwendet werden oder es sind zusätzliche Kommunikationsmechanismen in der verbleibenden Bandbreite vorzusehen. Bei Forwarding von Slave zu Slave über den Master muss mit einer doppelten Protokoll-Zykluszeit gerechnet werden. |
| 3005 | Die Daten zwischen Master und den Slaves müssen fix immer zyklisch ausgetauscht werden, auch wenn sich der Inhalt nicht ändert. Der Master sendet permanent an alle Slaves die aktuellen Sollwerte, alle Slaves senden daraufhin bedingungslos alle Istwerte an den Master. |
| 3006 | Zur Synchronisation der Slaves mit dem Master sind eigene Sync-Pakete (Broadcast) erlaubt. Es darf auch PTP (IEEE 61588) verwendet werden. |
| 3007 | Mehrere Master-Slave Segmente müssen nebeneinander auf demselben Netzwerk lauffähig sein. Durch Kennzeichnung der Pakete ist eine gegenseitige Beeinflussung zu vermeiden. Die Paket-Signatur muss optional konfigurierbar sein. |
| 3008 | Security Funktionen wie Benutzerkennung, einloggen, Verschlüsselung, etc sind nicht vorgesehen. Es handelt sich bei diesem Protokoll um eine feldbusähnliche Implementierung ohne Interaktion von Personen (M2M). |
| 3009 | Routing Protokolle müssen nicht unterstützt werden. Alle Teilnehmer müssen sich im selben Netzwerk befinden (Broadcast Domain). Die Layer 3 Schicht der Switches ist somit nicht verwendbar. |
| 3010 | Die Ermittlung der MAC-Adressen aller Teilnehmer erfolgt im Master in einem eigenen Protokoll (ARP-Ersatz so wie im Profinet) |
| 3011 | Normaler TCP/IP Datenverkehr muss neben dem Windpark Protokoll optional möglich sein. Eine Auslastung der Netzwerkbandbreite über einem konfigurierbaren Grenzwert muss gemeldet werden. Der TCP/IP Datenverkehr muss über eine entsprechenden Konfiguration auf der Empfangsseite unterdrückbar sein (alle TCP/IP Pakete verwerfen). |
| 3012 | Es müssen bei entsprechender Netzwerk Infrastruktur (Backbone, Switches, geringe Übertragungsverzögerung) 250 Clients mit jeweils 250 Bytes Nutzdaten in beide Richtungen in einer Zykluszeit von 20 ms zuverlässig übertragbar sein. Bei mehr Teilnehmern oder größeren Datenblöcken erhöht sich entsprechend die Zykluszeit oder umgekehrt. |
| 3013 | Auf der Master CPU darf maximal ein Jitter von 25 % der Zykluszeit entstehen. Bei einer Zykluszeit von 20 ms sind das 5 ms Jitter, verbleibt eine Abarbeitungszeit von 15 ms. In dieser Abarbeitungszeit müssen alle Anfragen versendet und alle Antworten eingetroffen sein. |
| 3014 | Ein neu gebooteter Slave muss automatisch nach einigen Zyklen als existent erkannt werden und Teil der Abfragelogik sein. Dies gilt auch für ausgefallene Slaves, die nach einiger Zeit wieder funktionstüchtig sind. |
| 3015 | Die empfangene Paketgröße muss mit der konfigurierten Empfangsgröße übereinstimmen. Falls nicht, wird die Kommunikation für diesen Teilnehmer nicht gestartet. |
| 3016 | Alle Ethernet Schnittstellen auf der Steuerung müssen für die Vernetzung mit diesem Protokoll geeignet sein. |
| 3017 | Es sollen zumindest 2 unterschiedlich schnell kommunizierende Gruppen konfiguriert werden können (z.B. die Zykluszeit von WKA1 bis WKA20 beträgt 4ms, jene von WKA21 bis WKA100 lediglich 32ms) |

| **Kommunikationsanforderungen "Rainy-Day"** | |
|---|---|
| 3101 | Ein Slave muss den Ausfall von den zyklischen Master-Anfragen an die Applikation weitergeben und optional ins Logbuch eintragen. Ein Ausfall ist dann gegeben, wenn für eine konfigurierbare Anzahl von Zyklen die Master-Anfrage ausbleibt. |
| 3102 | Ein Master muss den Ausfall von den zyklischen Slave-Antworten an die Applikation weitergeben und optional ins Logbuch eintragen. Ein Ausfall ist dann gegeben, wenn für eine konfigurierbare Anzahl von Zyklen die Slave-Antwort ausbleibt. |
| 3103 | Im Fehlerfall soll kein Retry ausgelöst werden. Ein Fehler wird von der Gegenstelle bei Ausfall mehrerer Pakete hintereinander erkannt. Der Retry ist durch die nächste Anfrage abgedeckt. Siehe auch 3101 und 3102 |
| 3104 | Eine Überschreitung der Zykluszeit soll festgestellt und in die Fehlerstatistik aufgenommen werden. |
| 3105 | Mögliche Netzwerkfehler wie Paket Verdoppelung, Paket Modifikation, Paket Verzögerung, Paket Reihenfolge, Einspeisung von Fremdpaketen müssen erkannt werden und dürfen nicht zu einem Fehlverhalten führen. Weitere mögliche Netzwerkfehler sind im Pflichtenheft zu definieren. |
| 3106 | Falls ein Slave nach Ablauf des Zyklus nicht antwortet, wird der Fehlerzähler für diesen Teilnehmer erhöht. Die Anfrage wird im nächsten Zyklus erneut versucht, bis die Maximalzahl der fehlenden Antworten in Sequenz erreicht ist. Ab dann wird dieser Slave nicht mehr angefragt und gilt als ausgefallen. |
| 3107 | Ausgefallen markierte Slaves müssen vom Master zyklisch (langsam) auf erneute Kommunikationsaufnahme geprüft werden können. Das Zeitraster dieser automatischen Prüfung muss einstellbar zwischen "nie" und einigen Minuten global für alle Teilnehmer konfigurierbar sein. Ein sinnvoller Default-Wert ist zu definieren (z.B.: 30sec.). Diese Anforderung ist eventuell über 3014 automatisch abgedeckt. |
| 3108 | Kann die Zykluszeit der Übertragungen nicht eingehalten werden (z.B. durch Bandbreitenverlust auf der Übertragungsstrecke), so soll das Protokoll automatisch mit weniger Last kommunizieren und den Umstand alarmieren (Selbstschutz ohne totalen Kommunikationsverlust). Wenn die Bandbreite wieder verfügbar ist, soll das System wieder mit dem ursprünglich konfigurierten Zyklus kommunizieren. Dabei muss beachtet werden, dass die Applikationen in deren Zyklus nicht beeinflusst werden dürfen (ev. Sync Paket muss immer vorhanden sein). Details dazu sind im Pflichtenheft zu definieren. Siehe dazu auch 4102. |

### Konfigurations Funktionen

| **Konfigurationsanforderungen "Sunny-Day"** | |
|---|---|
| 4001 | Die Paketgröße der Nutzdaten muss für Anfrage und Antwort unterschiedlich konfigurierbar sein. Diese Konfiguration ist am Master und Slave notwendig. |
| 4002 | Die Zykluszeit am Master muss konfigurierbar sein. Der Slave kann die Zykluszeit automatisch ermitteln oder er bekommt diese vom Master zugewiesen. |
| 4003 | Die einzubeziehenden Slaves werden entweder via Konfiguration der IP-Adressen, IP-Bereiche (kontinuierliche IP-Adressen von/bis) oder über einen automatischen Mechanismus zum Startzeitpunkt (Anfrage wer ist alles online) des Masters konfiguriert. Eine Methodik ohne Verwendung von IP-Adressen sollte angedacht werden. |
| 4004 | Die maximale Anzahl von fehlenden Paketen muss optional am Master und Slave konfigurierbar sein. |
| 4005 | Die maximale Anzahl von Teilnehmern muss optional konfigurierbar sein. |
| 4006 | Die Signatur der Pakete muss optional konfigurierbar sein. |
| 4007 | Die Priorisierung der Ethernetpakete via VLAN-Tags muss optional via Konfiguration möglich sein. Die Priorisierung im Protokoll Stack erfolgt durch die Konfiguration der VxWorks Priorität. |
| 4008 | Die maximale Netzwerkauslastung durch dieses Protokoll muss optional in % der Gesamtbandbreite konfigurierbar sein. Eine entsprechende Bandbreite muss für die normale Kommunikation reserviert bleiben (Diagnostizierbarkeit, SCADA, etc). |
| 4009 | Für alle Einstellungen (Timing-/Wiederhol-/... Parameter) sind sinnvolle Defaultwerte zu ermitteln und samt Begründung zu dokumentieren. Ziel ist es bei minimaler Kenntnis des Protokolls und seiner Besonderheiten schnellstmöglich eine lauffähige Kommunikation etablieren zu können. |
| 4010 | Alle Konfigurationen (egal ob Master oder Slave) sollen auch per Fernzugriff über das Netzwerk möglich sein |
| 4011 | Die Konfiguration muss auch zentral vom Master aus erfolgen können und automatisch an die Slaves verteilt werden können (initial aber auch bei Änderungen). |
| 4012 | Das Konfigurationswerkzeug muss sämtliche Einstellungen via File in einem geeigneten Format importieren und exportieren können. Dabei müssen alle Slaves in einer einzigen Tabelle angeordnet sein können. |

| **Konfigurationsanforderungen "Rainy-Day"** | |
|---|---|
| 4101 | Bei fehlender Mindestkonfiguration (4001, 4002, 4003) darf der Treiber nicht starten |
| 4102 | Bei Überschreitung der vorgegebenen Netzauslastung (4008) muss automatisch die Datenbandbreite für das Windpark Protokoll reduziert werden, indem Slaves nicht mehr bei jedem Zyklus abgefragt werden. Diese automatische Verlangsamung der Kommunikation gilt als Selbstschutzmaßnahme. Eine Alarmierung/Protokollierung muss möglich sein. |

### Leistungsanforderungen

Die angegebenen Extremwerte sind jeweils nicht in Kombination gedacht und erfordern eine entsprechende Hardwareausstattung. Mögliche theoretische Mengengerüste bezogen auf Prozessorleistung sind im Anhang zu finden.

| **Datenmengen** | |
|---|---|
| Durchschnitt / Defaultwerte | • Anzahl Slaves je Netzwerk 250 |
| | • Paketgröße 250 Byte Nutzdaten in beide Richtungen |
| Extremfall / Maximalwerte | • Maximale Anzahl Slaves je Netzwerk 500 |
| | • Maximale Paketgröße 8KByte Nutzdaten für Empfang und 64KByte für Senden |
| | • Maximale Nutzdatenmenge aller Pakete je Richtung ist 25 MBit pro Sekunde |
| | • Maximale Anzahl Pakete in eine Richtung 50 000 pro Sekunde |

| **Verarbeitungs-/Reaktionsgeschwindigkeit** | |
|---|---|
| Durchschnitt | |
| Extremfall | • Maximale CPU Auslastung am Master durch dieses Protokoll darf 50 % bei maximaler Nutzdatenmenge auf der Steuerung nicht übersteigen |

| **Verarbeitungsziten/-intervalle** | |
|---|---|
| Durchschnitt / Defaultwerte | • Zykluszeit 20 ms |
| Extremfall / Maximalwerte | • Kleinste Zykluszeit 500 µs bei ausreichender CPU-Leistung, Netzwerkbandbreite, geringer Anzahl Slaves und kleinen Datenpaketen |
| | • Jitter eines gesamten Durchlaufes auf der Master CPU darf maximal 25 % der Zykluszeit betragen |

Die nachfolgende Tabelle gibt den schrittweisen Ablauf einer Kommunikation zwischen Master und Slave wieder:

### Ablauf Hauptfunktionen Master und Slave

| Funktion | Beschreibung |
|---|---|
| Initialisierung (Start) | Master/Slave: M1 Service starten |
| | Master/Slave: Tasks starten; interne Datenstrukturen vorbereiten; |
| Konfiguration (Auswertung der Konfiguration oder automatische Ermittlung) | Master/Slave: Konfiguration einlesen und prüfen |
| Pakete versenden | Master/Slave: Datenpakete erstellen (MAC, Type, VLAN, Protokoll Header, Daten) |
| | Master/Slave: Datenpakete in Netzwerkbuffer kopieren und versenden |
| Pakete empfangen | Master/Slave: Datenpakete prüfen → verarbeiten, verwerfen oder weiterleiten (z.B. TCP) |
| | Master/Slave: Datenpakete aus Netzwerkbuffer in Slave-Buffer kopieren |
| Synchronisation | Master: Sync-Pakete senden |
| | Slave: Sync-Pakete empfangen |
| Verbindungsaufbau | Master: Verbindung zu Slave aufbauen (Suche, Konfiguration, Status) |
| | Slave: Anfragen beantworten (Suche, Konfiguration, Status) |
| Verbindungsüberwachung | Master: Alle Slaves auf Eingangsdaten prüfen |
| | Slave: Prüfen ob Masteranfragen + Sync-Pakete zeitgerecht eintreffen |
| Anbindung an die Applikation | Master: Applikationsfunktionen (Verwaltung, Datenaustausch, Diagnose) erstellen |
| | Slave: Applikationsfunktionen (Datenaustausch, Diagnose) erstellen |
| Anbindung an den Ethernet Controller (Weiterleitung TCP/IP) | Master/Slave: Anbindung an unterste Schicht im Ethernet Treiber (rohe Pakete) |
| Fehlerüberwachung | Master/Slave: Netzwerkfehler |
| | Master: Netzwerkauslastung |
| | Master: CPU-Auslastung |
| | Master: Laufzeiten der Applikation |
| Statistische Daten bereitstellen | Master/Slave: Diagnose-Funktionen |
| | Master/Slave: Anzeige als globale Variablen |
| Globale Variablen bereitstellen | Master/Slave: Slave-Informationen |
| | Master/Slave: Fehlerstatistik |
| Asynchrone Kommunikations-funktionen | Master: BusScan |

Die Erfindung zeichnet sich unter anderem durch folgende Merkmale aus, von denen jedes allein oder in Kombination unter einander wichtig ist:
1. Eine Vorrichtung und eine Verfahren zum Betrieb von Windpark-Verbundnetzen, insbesondere Verfahren zur Vernetzung zwischen dem Parkmanagement-System (Parkmaster) und einzelnen Windkraftanlagen (WKA) eines Windparks über ein zentrales Netzwerk zwecks Datenübertragung in beiden Richtungen, welches als Ring ausgebildet sein kann, wobei gemäß dem OSI-Schichtenmodell (42-48) von einer physikalischen Schicht 1 (Hardwareschicht 42) die Datenübertragung auf eine Schicht 2 (Ethernet- oder Isonet-Controller 43) erfolgt, sieht vor, dass mit einem WPP-Realtime-Treiber (49) die IP-Schicht (Schicht 3 des OSI-Modells) und die UDP/TCP-Schicht (Schicht 4 des OSI-Modells), sowie die RPC-Schicht (Schicht 5 des OSI-Modells) überbrückt (durchtunnelt) werden, und dass der WPP-Realtime-Treiber (49) eine unmittelbare Verbindung zwischen der Schicht 2 (Ethernet - oder Isonet-Controller 43) und der Schicht 7 (WPP-Applikation 48) herstellt, (Fig. 10).
2. In einer Weiterbildung sieht die Erfindung vor, dass der WPP-Realtime-Treiber (49) die Echtzeitkommunikation direkt auf dem Data Link Layer (Schicht 2 - Sicherungsschicht im OSI-Schichtenmodell) ausführt Die Standard TCP/IP Datenpakete werden jedoch an die IP-Schicht des TCP/IP-Stacks weitergeleitet.
3. In einer Weiterbildung sind folgende Merkmale vorgesehen:
   - lose Kommunikation über Ethernet
   - Kaskadierung von Kommunikationsteilnehmern (Windturmgruppen) über Subnetze
   - Synchronisation Slave mit Master über das Protokoll
   - Feldbuskommunikation in Form von Block Transfer
   - Automatische Suche von Teilnehmern
4. In einer Weiterbildung sind folgende Merkmale vorgesehen:
   - Online Zu- und Wegschaltung von Teilnehmern und auch Master
   - Automatische Übernahme größerer Mengengerüste
   - Redundanz mit aktiver Kommunikation auf allen Netzwerken bei redundanter Vernetzung.
5. In einer Weiterbildung sind folgende Merkmale vorgesehen:
   - Unabhängig von der Applikation versendet das WPP die Ausgangsdaten erst im nächsten Protokoll-Zyklus bzw. stellt die Eingangsdaten der Applikation zur Verfügung.
   - Um die Datenkonsistenz zu gewährleisten, werden alle Input- und Output-Daten doppelt gehalten.
   - Beim Empfangen eines Paketes wird dieses immer in den Backup-Buffer kopiert und erst im nächsten Zyklus von der Applikation ausgewertet. Beim Zyklusstart erfolgt der Buffer-Wechsel.
   - Beim Senden wird das Paket aus dem Backup-Buffer gesendet während die Applikation neue Werte in den aktuellen Buffer schreibt. Beim Zyklusstart erfolgt der Buffer-Wechsel.
6. In einer Weiterbildung sind folgende Merkmale vorgesehen:
   - Kein TCP/IP Stack (keine Sockets) notwendig
   - Einfach und unabhängig (nur eine Transportschicht)
   - Kommunikation in der ganzen Broadcast-Domäne (keine Subnetze)
   - Login und Benutzerverwaltung nicht erforderlich
   - Multicast Adressierung möglich
7. In einer Weiterbildung sind folgende Merkmale vorgesehen Schritt 1: Die Master-Applikation 23 schreibt die Ausgangsdaten (in den WPP Datencache 28)
   Schritt 2: Das WPP 28 sendet im nächsten Zyklus die Ausgangsdaten zum Slave (dort an das WPP 29)
   Schritt 3: Die Slave-Applikation 27 liest die Eingangsdaten (aus dem WPP Datencache 29)
   Schritt 4: Die Slave-Applikation 27 schreibt die Ausgangsdaten (in den WPP Datencache 29)
   Schritt 5: Das WPP 29 sendet im nächsten Zyklus die Ausgangsdaten zum Master (dort an das WPP 28)
   Schritt 6: Die Master-Applikation 23 liest die Eingangsdaten (aus dem WPP Datencache 28)
8. In einer Weiterbildung sind folgende Merkmale vorgesehen Sicherheitsmechanismen sind optional möglich und vorgesehen (Login, Authentication und SSL-Verschlüsselung)
   1. Priorisierung der Realtime-Pakete gegenüber TCP/IP Paketen
   2. Gleichzeitige Standard TCP/IP Kommunikation über das selbe Netzwerk ohne Beeinflussung des Echtzeitverhaltens

**Zeichnungslegende**

| | | | |
|---|---|---|---|
| 1 | Block | 29 | WPP-Datencache (Slave) |
| 2 | Startbefehl | | |
| 3 | Datenpaket | 30 | Parkmaster |
| 4 | Datenpaket | 31 | Parkmaster |
| 5 | Input-Datenpaket | 32 | Kopplungsmodul (Switch) |
| 6 | Input-Datenpaket | | |
| 7 | Richtungspfeil (7a, 7b) | 33 | Windpark-Einheit |
| 8 | Richtungspfeil (8a, 8b) | 34 | Windpark-Einheit |
| 9 | Block | 35 | Windpark-Einheit |
| 10 | Linie | 36 | Windpark-Einheit |
| 11 | Signal | 37 | Windpark-Einheit |
| 12 | Signal | 38 | WKA |
| 13 | Signal | 39 | Parkringleitung |
| 14 | Signal | 40 | Ringleitung |
| 15 | Auswertung | 41 | Ethernet-Controller |
| 16 | Signal | 42 | Schicht 1 |
| 17 | Linie | 43 | Schicht 2 |
| 18 | Befehl | 44 | - |
| 19 | Signal | 45 | Schicht 3 |
| 20 | Block | 46 | Schicht 4 |
| 21 | Datenblock | 47 | Schicht 5 |
| 22 | Regelungszyklus | 48 | Schicht 7 |
| 23 | Master-Applikation | 49 | WPP-Realtime Treiber |
| 24 | Signalpfad | 50 | WPP (Windpark-Protokoll) |
| 25 | Datenpaket | | |
| 26 | Signal | 51 | Trennlinie |
| 27 | Slave-Applikation a-n | 52 | Segment 1 |
| 28 | WPP-Datencache (Master) | 53 | Segment 2 |
| | | 54 | Slave-I nstanz |
| | | 55 | Master 1 |

## Patentansprüche

1. Vorrichtung zum Betrieb von Windpark-Verbundnetzen, insbesondere Vernetzung zwischen dem Parkmanagement-System (Parkmaster) und einzelnen Windkraftanlagen, WKA, eines Windparks über ein zentrales Netzwerk zwecks Datenübertragung in beiden Richtungen, wobei gemäß dem OSI-Schichtenmodell (42-48) von einer physikalischen Schicht 1 (42) die Datenübertragung auf eine Schicht 2 ( 43) erfolgt **dadurch gekennzeichnet,**
**dass** das Windpark-Verbundnetz als Ring mit einer zentralen Ringleitung und mindestens einer Parkringleitung ausgebildet ist, wobei das Parkmanagement-System (30, 31) mit einem Kopplungsmodul (32) verbunden ist, das die Verbindung mit der zentralen Ringleitung (40) herstellt, und die mindestens eine Parkringleitung (39) über ein weiteres Kopplungsmodul (32) an die zentrale Ringleitung (40) angeschlossen ist, und dass ein Windparkprotokoll, WPP, (50) mit einem WPP-Realtime-Treiber (49) sowohl den Datenverkehr auf einer zentralen Ringleitung (40), als auch auf einer Parkringleitung (39) und auch den Datenverkehr zwischen den WKA (38) und der Parkringleitung (39) steuert, wobei der WPP-Realtime-Treiber (49) ausgebildet ist, um die IP-Schicht, nämlich die Schicht 3 des OSI-Modells und die UDP/TCP-Schicht, nämlich die Schicht 4 des OSI-Modells, sowie die RPC-Schicht, nämlich die Schicht 5 des OSI-Modells zu überbrücken und eine unmittelbare Verbindung zwischen der Schicht 2, und einer WPP-Anwendungsschicht (48) herzustellen.

2. Vorrichtung nach mindestens einem der vorhergehenden Ansprüche, **dadurch gekennzeichnet, dass** eine Master-Applikation (23) im Parkmaster angeordnet ist, dass die Slave-Applikationen (27) in den WKA (38) angeordnet sind, dass ein WPP-Datencache (28) der Master-Applikation 23 zugeordnet ist, und dass ein WPP-Datencache (29) der Slave-Applikation (27) zugeordnet ist.

3. Vorrichtung nach mindestens einem der vorher gehenden Ansprüche, **dadurch gekennzeichnet, dass** das WPP-Protokoll im Vergleich zum Ethernet-Protokoll die Schichten RPC, UDP/TCP und IP (45, 46, 47) im OSI-Modell durchtunnelt (überbrückt).

## Claims

1. Device for operating wind farm grid systems, in particular networking between the farm management system (farm master) and individual wind turbines, WKAs, of a wind farm by means of a central network for the purpose of data transmission in both directions, the data transmission taking place according to the OSI layer model (42-48) from a physical layer 1 (42) to a layer 2 (43), **characterised in that** the wind farm grid system is configured as a ring with a central ring line and at least one farm ring line, wherein the farm management system (30, 31) is connected to a coupling module (32), which produces the connection to the central ring line (40), and the at least one farm ring line (39) is connected by a further coupling module (32) to the central ring line (40), and **in that** a wind farm protocol, WPP, (50) with a WPP real-time driver (49) controls both the data traffic on a central ring line (40) and on a farm ring line (39) and also the data traffic between the WKA (38) and the farm ring line (39), wherein the WPP real-time driver (49) is configured to bridge the IP layer, namely the layer 3 of the OSI model, and the UDP/TCP layer, namely the layer 4 of the OSI model, and the RPC layer, namely the layer 5 of the OSI model, and to produce a direct connection between the layer 2 and a WPP application layer (48).

2. Device according to at least any one of the preceding claims, **characterised in that** a master application (23) is arranged in the farm master, **in that** the slave applications (27) are arranged in the WKAs (38), **in that** a WPP data cache (28) is associated with the master application (23), and **in that** a WPP data cache (29) is associated with the slave application (27).

3. Device according to at least any one of the preceding claims, **characterised in that** the WPP protocol, in comparison to the Ethernet-protocol, tunnels through (bridges) the layers RPC, UDP/TCP and IP (45, 46, 47) in the OSI model.

## Revendications

1. Dispositif pour faire fonctionner des réseaux interconnectés de parcs d'éoliennes, en particulier interconnexion entre le système de gestion de parc (gestionnaire de parc) et des éoliennes individuelles, WKA, d'un parc d'éoliennes par l'intermédiaire d'un réseau central en vue d'une transmission de données dans les deux sens, étant précisé que selon l'architecture en couches OSI (42-48), la transmission de données se fait d'une couche physique 1 (42) vers une couche 2 (43),
**caractérisé en ce que** le réseau interconnecté de parc d'éoliennes est conçu comme un anneau, avec une ligne annulaire centrale et au moins une ligne annulaire de parc, étant précisé que le système de gestion de parc (30, 31) est relié à un module de couplage (32) qui établit la liaison avec la ligne annulaire centrale (40), et la ou les lignes annulaires de parc (39) sont raccordées par un autre module de couplage (32) à la ligne annulaire centrale (40), et **en ce qu'**un protocole de parc d'éoliennes, WPP, (50) commande avec un pilote en temps réel WPP (49) à la fois le trafic de données sur une ligne annulaire centrale (40) et sur une ligne annulaire de parc (39) et aussi le trafic de données entre l'éolienne (38) et la ligne annulaire de parc (39), étant précisé que le pilote en temps réel WPP (49) est conçu pour court-circuiter la couche IP, à savoir la couche 3 de l'architecture OSI, et la couche UDP/TCP, à savoir la couche 4 de l'architecture OSI, ainsi que la couche RPC, à savoir la couche 5 de l'architecture OSI, et pour établir une liaison directe entre la couche 2 et une couche d'application WPP (48).

2. Dispositif selon l'une au moins des revendications précédentes, **caractérisé en ce qu'**une application maître (23) est disposée dans le gestionnaire de parc, **en ce que** les applications esclaves (27) sont disposées dans les éoliennes (38), **en ce qu'**un cache de données WPP (28) est affecté à l'application maître (23) et **en ce qu'**un cache de données WPP (29) est affecté à l'application esclave (27).

3. Dispositif selon l'une au moins des revendications précédentes, **caractérisé en ce que** le protocole court-circuite, par rapport au protocole Ethernet, les couches RPC, UDP/TCP et IP (45, 46, 47) dans l'architecture OSI.
